(19) Europäisches Patentamt / European Patent Office / Office européen des brevets

(11) **EP 3 089 019 B1**

(12) **EUROPEAN PATENT SPECIFICATION**

(45) Date of publication and mention
of the grant of the patent:
**09.06.2021 Bulletin 2021/23**

(51) Int Cl.:
*G06F 3/0488* (2013.01)     *G06F 1/3234* (2019.01)
*G06F 1/3212* (2019.01)     *G06T 13/00* (2011.01)

(21) Application number: **16166999.9**

(22) Date of filing: **26.04.2016**

(54) **METHOD FOR DISPLAYING USER INTERFACE AND ELECTRONIC DEVICE THEREOF**

VERFAHREN ZUR ANZEIGE EINER BENUTZERSCHNITTSTELLE UND ELEKTRONISCHE VORRICHTUNG DAFÜR

PROCÉDÉ D'AFFICHAGE D'UNE INTERFACE UTILISATEUR ET DISPOSITIF ÉLECTRONIQUE CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2015 KR 20150059032**

(43) Date of publication of application:
**02.11.2016 Bulletin 2016/44**

(73) Proprietor: **Samsung Electronics Co., Ltd.
Suwon-si 16677 (KR)**

(72) Inventors:
• **Jeon, Ikjae
Busan (KR)**
• **Kim, Kwang-Seab
Seoul (KR)**
• **Lee, Seung-Ho
Suwon-si (KR)**

(74) Representative: **Nederlandsch Octrooibureau
P.O. Box 29720
2502 LS The Hague (NL)**

(56) References cited:
KR-A- 20040 092 009     US-A1- 2003 200 481
US-A1- 2009 058 842     US-A1- 2010 317 408

## Description

## TECHNICAL FIELD

Various exemplary embodiments of the present disclosure relate to a method for displaying a user interface on a display and an electronic device thereof.

## BACKGROUND

An electronic device can display a user interface consisting of an icon or an image, etc. on a display based on a specific input. When displaying the user interface on the display based on the specific input, the electronic device can apply an animation effect consisting of at least two or more images, to display the user interface on the display.

When displaying the user interface consisting of the icon or the image, etc. on the display, the electronic device can consume battery power. When electronic device constructs and displays the user interface on the display, with the diversification of animations applied, a battery consumption amount is increasing.

Because the electronic device displays the image to which the animation effect is applied based on the specific input, it can aggravate a user's anxiety feeling about the battery consumption amount.

US 2009/058842 A1 relates to devices and methods for controlling a display to conserve power, wherein an animation is simplified. KR 2004 0092009 A relates to a power saving method of a mobile terminal that is provided to reduce power consumption of a mobile terminal by controlling an animation interval and a sound output according to a power saving level. US 2010/317408 A1 relates to a power conservation method for mobile device displays, wherein a reduced power consumption state includes reducing one or more illumination factors for the display screen, and reducing one or more animation factors for the display screen. US 2003/200481 A1 relates to a method by which the presentation of superfluous media content requiring system activity is reduced or suspended in consideration of system power.

## SUMMARY

To address the above-discussed deficiencies, it is a primary object to provide, for use in a method for displaying a user interface on a display and an electronic device thereof.

According to various exemplary embodiments, when an electronic device displays a user interface to which an animation effect is applied based on battery state information, the electronic device may control an animation operation time.

The invention is defined in the independent claims. Further aspects are outlined in the dependent claims.

The following references to "embodiments", as long as they do not comprise all the features of any of the independent claims, are not according to the invention as claimed and are present for illustration purposes only.

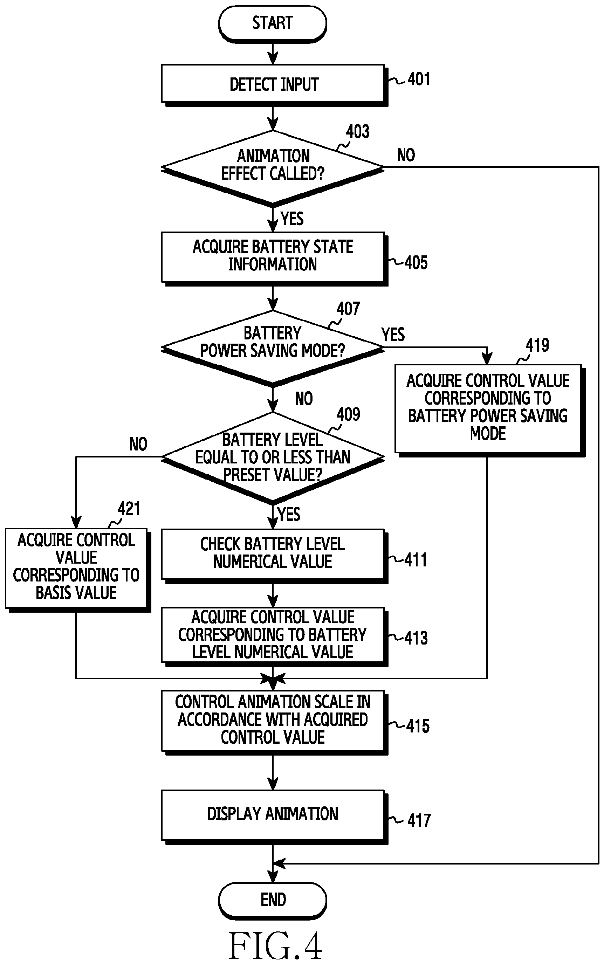

Figure 4 and the associated passages disclose an embodiment of the invention. The rest of the figures and their corresponding passages relate to unclaimed combinations of features, which are nevertheless useful to highlight specific aspects of the invention.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device maybe implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates a network environment including an electronic device according to various exemplary embodiments;
FIG. 2 illustrates a flow of an operation of displaying an animation in an electronic device according to various exemplary embodiments;
FIG. 3 illustrates a flow of an operation of displaying an animation in an electronic device according to various exemplary embodiments;
FIG. 4 illustrates a flow of an operation of displaying an animation in an electronic device according to various exemplary embodiments;
FIGS. 5A, 5B, and 5C illustrate an operation of displaying a designated image on a display in response to a specific input in an electronic device according to various exemplary embodiments;

FIG. 6 illustrates an operation of displaying an animation image in accordance with an animation operation time which is designated to a basis value in an electronic device according to various exemplary embodiments;

FIG. 7 illustrates an operation of displaying an animation image in accordance with an animation operation time which is changed based on a control value in an electronic device according to various exemplary embodiments;

FIG. 8 illustrates a block diagram of an electronic device according to various exemplary embodiments; and

FIG. 9 illustrates a block diagram of a program module according to various exemplary embodiments.

## DETAILED DESCRIPTION

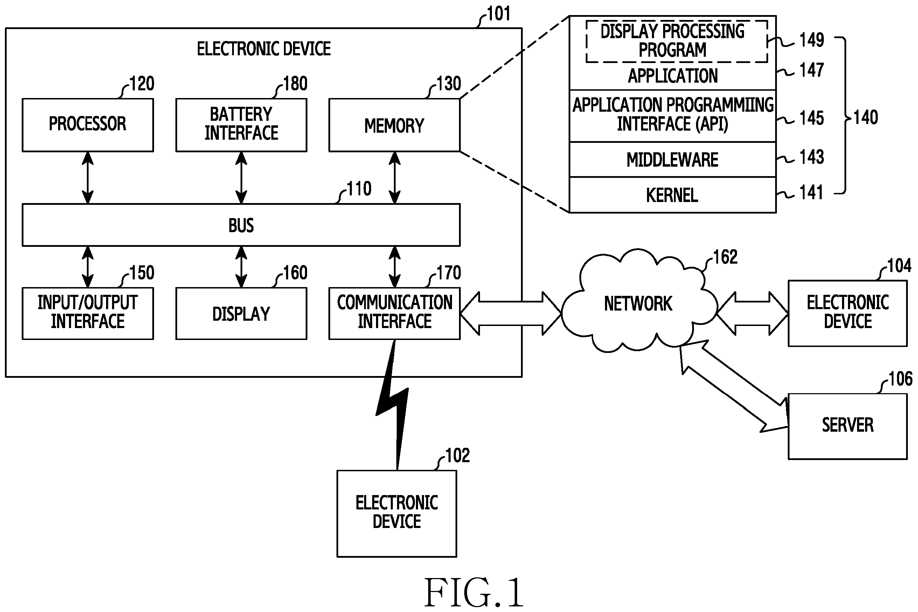

FIGURES 1 through 9, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device or method. Hereinafter, various embodiments of the present disclosure will be described in connection with the accompanying drawings.

The present disclosure may have various embodiments, and modifications and changes may be made therein. Therefore, the present disclosure will be described in detail with reference to particular embodiments shown in the accompanying drawings. In the description of the drawings, similar reference numerals may be used to designate similar elements.

As used in various embodiments of the present disclosure, the expressions "include", "may include" and other conjugates refer to the existence of a corresponding disclosed function, operation, or constituent element, and do not limit one or more additional functions, operations, or constituent elements. Further, as used in various embodiments of the present disclosure, the terms "include", "have", and their conjugates are intended merely to denote a certain feature, numeral, step, operation, element, component, or a combination thereof, and should not be construed to initially exclude the existence of or a possibility of addition of one or more other features, numerals, steps, operations, elements, components, or combinations thereof.

In various embodiments of the present disclosure, the expression "or" or "at least one of A or/and B" includes any or all of combinations of words listed together. For example, the expression "A or B" or "at least A or/and B" may include A, may include B, or may include both A and B.

In the present disclosure, expressions including ordinal numbers, such as "first" and "second," and the like, may modify various elements. However, such elements are not limited by the above expressions. For example, the above expressions do not limit the sequence and/or importance of the elements. The above expressions are used merely for the purpose of distinguishing an element from the other elements. For example, a first user device and a second user device indicate different user devices although both of them are user devices. For example, a first element may be termed a second element, and likewise a second element may also be termed a first element without departing from the scope of various embodiments of the present disclosure.

When an element is referred to as being "coupled" or "connected" to any other element, it should be understood that not only the element may be coupled or connected directly to the other element, but also a third element may be interposed therebetween. Contrarily, when an element is referred to as being "directly coupled" or "directly connected" to any other element, it should be understood that no element is interposed therebetween.

The terms as used in various embodiments of the present disclosure are used merely to describe a certain embodiment and are not intended to limit the present disclosure. As used herein, singular forms may include plural forms as well unless the context explicitly indicates otherwise. Furthermore, all terms used herein, including technical and scientific terms, have the same meaning as commonly understood by those of skill in the art to which the present disclosure pertains. Such terms as those defined in a generally used dictionary are to be interpreted to have the meanings equal to the contextual meanings in the relevant field of art, and are not to be interpreted to have ideal or excessively formal meanings unless clearly defined in various embodiments of the present disclosure.

An electronic device according to various embodiments of the present disclosure may be a device including a communication function. For example, the electronic device may include at least one of a Smartphone, a Tablet Personal Computer (PC), a Mobile Phone, a Video Phone, an Electronic Book (e-book) reader, a Desktop PC, a Laptop PC, a Netbook Computer, a Personal Digital Assistant (PDA), a Portable Multimedia Player (PMP), an MP3 player, a Mobile Medical Appliance, a Camera, and a Wearable Device (e.g. a Head-Mounted-Device (HMD) such as electronic glasses, electronic clothes, an electronic bracelet, an electronic necklace, an electronic appcessory, electronic tattoos, or a smartwatch).

According to some embodiments, the electronic device may be a smart home appliance with a communication function. For example, the smart home appliance may include at least one of a television, a digital video disk (DVD) player, an audio, a refrigerator, an air conditioner, a vacuum cleaner, an oven, a microwave oven, a washing machine, an air cleaner, a set-top box, a TV box (e.g., Samsung HomeSyncTM, Apple TVTM, or Google TVTM), a game console, an electronic dictionary, an electronic key, a camcorder, and an electronic photo frame.

According to some embodiments, the electronic device may include at least one of various medical appliances (e.g., magnetic resonance angiography (MRA), magnetic resonance imaging (MRI), computed tomography (CT), and ultrasonic machines), navigation equipment, a global positioning system (GPS) receiver, an event data recorder (EDR), a flight data recorder (FDR), automotive infotainment device, electronic equipment for ships (e.g., ship navigation equipment and a gyrocompass), avionics, security equipment, a vehicle head unit, an industrial or home robot, an automatic teller machine (ATM) of a banking system, and a point of sales (POS) of a shop.

According to some embodiments, the electronic device may include at least one of a part of furniture or a building/structure, an electronic board, an electronic signature receiving device, a projector, and various kinds of measuring instruments (e.g., a water meter, an electric meter, a gas meter, and a radio wave meter).

The electronic device according to various embodiments of the present disclosure may be a combination of one or more of the aforementioned various devices. Further, the electronic device according to various embodiments of the present disclosure may be a flexible device. Further, it will be apparent to those skilled in the art that the electronic device according to various embodiments of the present disclosure is not limited to the aforementioned devices.

Hereinafter, an electronic device according to various embodiments of the present disclosure will be described with reference to the accompanying drawings. The term "user" as used in various embodiments of the present disclosure may indicate a person who uses an electronic device or a device (e.g., artificial intelligence electronic device) that uses an electronic device.

FIG. 1 illustrates a network environment including an electronic device according to various embodiments of the present disclosure.

Referring to FIG. 1, the electronic device 101 (ex: the first electronic device 101) may include a bus 110, a processor 120, a memory 130, an input/output (I/O) interface 150, a display 160, and a communication interface 170.

The bus 110 may, for example, be a circuit for connecting the above-described elements with each other, and transferring communication (e.g., a control message) between the above-described elements.

The processor 120 may receive, for example, an instruction from the above-described other elements (e.g., the memory 130, the I/O interface 140, the display 150, or the communication interface 160, and the like) via the bus 110, decipher the received instruction, and execute an operation or a data process corresponding to the deciphered instruction.

The processor 120 may be included in the electronic device 101 to perform a specified function of the electronic device 101. According to an embodiment of the present disclosure, the processor 120 may include one or more application processors (APs) and one or more microcontroller units (MCUs). According to another embodiment of the present disclosure, the processor 120 may include one or more MCUs as applications, or may be functionally connected to one or more MCUs. In FIG. 1, the APs and the MCUs may be included in one integrated circuit (IC) package, or may be separately configured to be included in different IC packages, respectively. According to an embodiment of the present disclosure, the MCUs may also be included in an IC package of the APs so as to be configured as one IC package together with the APs. Although the processor 120 is illustrated as including the APs or the MCUs, it is nothing more than an embodiment for clear understanding, and it is apparent that the processor 120 may also perform the operations of the APs and/or the MCUs.

The APs may control a plurality of hardware or software elements connected thereto and may perform processing and operations on various types of data including multimedia data by driving an operating system (OS) or application programs (or applications). The APs may be embodied as, for example, a system on chip (SoC). According to an embodiment of the present disclosure, the processor 120 may further include a graphics processing unit (GPU) (not illustrated).

The MCUs may be processors configured to perform specified operations. According to an embodiment of the present disclosure, the MCUs may acquire sensing information through one or more specified motion sensors (e.g., a gyro sensor, an acceleration sensor, and a geomagnetic sensor), compare the acquired sensing information, and determine the respective operating states of the specified sensors with reference to a database of the electronic device 101.

According to an embodiment of the present disclosure, the APs or the MCUs may load instructions or data received from at least one of non-volatile memories or other elements connected thereto in volatile memories, and may process the loaded instructions or data. Furthermore, the APs or the MCUs may store data received from or generated by at least one of the other elements in the non-volatile memories.

The memory 130 may store commands or data (e.g., a reference pattern or a reference touch area) associated with one or more other components of the electronic device 101. According to an embodiment of the present disclosure, the memory 130 may store software and/or a program. For example, the program may include a kernel 141, a middleware 143, an application programming interface (API) 145, an application program 147, or the like. At least some of the kernel 141, the middleware 143, and the API 145 may be referred to as an OS.

The kernel 141 may control or manage system resources (e.g., the bus 110, the processor 120, or the memory 130) used for performing an operation or function implemented by the other programs (e.g., the middleware 143, the API 145, or the applications 147). Furthermore, the kernel 141 may provide an interface through which the middleware 143, the API 145, or the applications 147 may access the individual elements of the electronic device 101 to control or manage the system resources.

The middleware 143, for example, may function as an intermediary for allowing the API 145 or the applications 147 to communicate with the kernel 141 to exchange data.

In addition, the middleware 143 may process one or more task requests received from the applications 147 according to priorities thereof. For example, the middleware 143 may assign priorities for using the system resources (e.g., the bus 110, the processor 120, the memory 130, or the like) of the electronic device 101, to at least one of the applications 147. For example, the middleware 143 may perform scheduling or loading balancing on the one or more task requests by processing the one or more task requests according to the priorities assigned thereto.

The application 147 may include at least one of an application designated to the electronic device 101 or an application received from the external electronic device (e.g., server). The display processing program 149 may be included and provided in the application 147, or may be stored in the memory 130 as a separate program.

The display processing program 149 may detect a specific input that is set to display a user interface through the input/output interface 150, and determine a user interface to which an animation effect corresponding to the specific input is applied. And, the display processing program 149 may be a program of acquiring battery state information through the battery interface 170, determining an animation operation time based on the battery state information, determining an animation and/or at least one image frame (or image) based on the animation operation time, and displaying an animation of a user interface based on the determined frame. According to one exemplary embodiment, the battery state information may include at least one information among battery level information, battery operation mode information, and battery use amount information.

According to one exemplary embodiment, the display processing program 149 may be a program of determining a control value for determining an animation operation time based on battery state information, and determining the animation operation time by applying the control value to an operation time basically set to an animation (hereinafter, referred to as a "basic operation time").

According to one exemplary embodiment, the display processing program 149 may be a program of determining a result of multiplying a control value and a basic operation time together, as an animation operation time.

According to one exemplary embodiment, the display processing program 149 may be a program of generating an animation using a part of an image frame.

According to one exemplary embodiment, the display processing program 149 may be a program of generating an animation by two or more images generated using a part of an image frame.

According to one exemplary embodiment, the display processing program 149 may be a program of displaying an animation using two or more images at a previously designated time gap.

According to one exemplary embodiment, the display processing program 149 may be a program of displaying an image on the display 150 at a time point at which an animation is ended.

The API 145 is an interface through which the applications 147 control functions provided from the kernel 141 or the middleware 143, and may include, for example, at least one interface or function (e.g., instruction) for file control, window control, image processing, or text control.

The I/O interface 150 may forward an instruction or data inputted from a user through an I/O device (e.g., various sensors such as an acceleration sensor and a gyro sensor and/or a device such as a keyboard or a touch screen), for example, to the processor 120, the memory 130 or the communication interface 170 through the bus 110. For example, the I/O interface 150 may provide data about a user's touch inputted through a touch screen, to the processor 120. Also, the I/O interface 150 may, for example, output an instruction or data received from the processor 120, the memory 130 and the communication interface 170 through the bus 110, through an output device (e.g., a speaker or the display 160). For example, the I/O interface 150 may output voice data processed by the processor 120, to a user through the speaker.

According to various exemplary embodiments, when the electronic device 101 detects an input, the electronic device 101 may use a sensor module (not shown) included in the electronic device 101. For instance, the sensor module may measure a physical quantity or detect an activation state of the electronic device 101, and convert measured or detected information into an electric signal. For instance, the sensor module may include at least one of a gesture sensor, a gyro sensor, an air pressure sensor, a magnetic sensor, an acceleration sensor, a grip sensor, a proximity sensor, a color sensor (e.g., a Red, Green, and Blue (RGB) sensor), a medical sensor, a temperature/humidity sensor, an illuminance sensor, or an Ultraviolet (UV) sensor. Additionally or alternatively, the sensor module may include an E-nose sensor (not shown), an Electromyography (EMG) sensor (not shown), an Electroencephalogram (EEG) sensor (not shown), an Electrocardiogram (ECG) sensor (not shown), an InfraRed (IR) sensor (not shown), an iris scan sensor (not shown), or a finger scan sensor (not shown), and the like. The sensor module may further include a control circuit for controlling at least one or more sensors belonging therein. Further, the sensor module may be in a state of being coupled with the input/output interface 150, and may be included and constructed in the input/output interface 150.

The display 160 may display various information (e.g., multimedia data or text data, and the like) to a user. Also, the display 160 may be comprised of a touch screen for inputting an instruction by touching or proximity touching an input means to a display.

The communication interface 170 may connect a communication between the first electronic device 101 and the external device (e.g., the electronic device 103 or the server 106). For example, the communication interface 160 may connect to a network 162 through wireless communication or wired communication, and communicate with the external device.

The wireless communication may include, for example, at least one of short-range wireless communication such as WiFi, Bluetooth (BT), near field communication (NFC), and GPS, or cellular communication (e.g., long term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM)). The wired communication may include, for example at least one of a universal serial bus (USB), a high definition multimedia interface (HDMI), a recommended standard-232 (RS-232), or a plain old telephone service (POTS).

The GNSS may include at least one of, for example, a GPS, a global navigation satellite system (Glonass), a Beidou navigation satellite system (hereinafter, referred to as "Beidou"), and European global satellite-based navigation system (Galileo). Hereinafter, in an embodiment of the present disclosure, the "GPS" may be interchangeably used with the "GNSS". The wired communication may include, for example, at least one of a universal serial bus (USB), a high definition multimedia interface (HDMI), recommended standard 232 (RS-232), and a plain old telephone service (POTS). The network 162 may include at least one of a communication network, such as a computer network (e.g., a local area network (LAN) or a wide area network (WAN)), the internet, and a telephone network.

Each of the first external electronic device 102 and the second external electronic device 104 may be a device which is the same as or different from the electronic device 101. According to an embodiment of the present disclosure, the server 106 may include a group of one or more servers. According to various embodiments of the present disclosure, all or a part of operations performed in the electronic device 101 can be performed in the other electronic device or multiple electronic devices (e.g., the first external electronic device 102 or the second external electronic device 104 or the server 106). According to an embodiment of the present disclosure, when the electronic device 101 should perform some functions or services automatically or by a request, the electronic device 101 may make a request for performing at least some functions related to the functions or services to another device (e.g., the first external electronic device 102 or the second external electronic device 104, or the server 106) instead of performing the functions or services by itself or additionally. Another electronic device (e.g., the first external electronic device 102 or the second external electronic device 104, or the server 106) may perform a function requested from the electronic device 101 or an additional function and transfer the performed result to the electronic device 101. The electronic device 101 can provide the requested function or service to another electronic device by processing the received result as it is or additionally. To this end, for example, cloud computing, distributed computing, or client-server computing technology may be used.

The battery interface 180 may acquire battery state information of a battery provided in the electronic device 101. For instance, the battery interface 180 may acquire battery level information based on electric current of the battery. The battery interface 180 may acquire running program information through at least one processor 120 of the electronic device 101 or battery electric current information through the program. When the electronic device 101 operates in at least one mode among a battery operation mode (e.g., a power saving mode or a maximum power saving mode), the battery interface 180 may acquire information about the corresponding battery operation mode. Based on the acquired information, the battery interface 18 may generate various information related to a current battery state, such as battery level information, battery use amount information, or battery operation mode information, and notify the generated information to a user (e.g., display on the display 160).

According to one exemplary embodiment of the present disclosure, the network 162 may be a telecommunications network. The telecommunications network may include at least one of a computer network, the Internet, Internet of Things (IoT), or a telephone network. According to one exemplary embodiment, a protocol (e.g., a transport layer protocol, a data link layer protocol, or a physical layer protocol) for communication between the electronic device 101 and an external device may be supported in at least one of the application 147, the application programming interface 145, the middleware 143, the kernel 141, or the communication interface 170.

According to various exemplary embodiments, the electronic device 101 may display a User Interface (UI) such as an icon, an image, a text, and a link, on the display 160. The electronic device 101 may include and display the user interface such as the icon, in a page consisting of at least one layer. Here, the page may be constructed in plural, and the electronic device 101 may display on the display 160 at least one page among a plurality of pages based on a specific input.

According to various exemplary embodiments, the electronic device 101 may display an animation coupled with an image that is determined to be displayed on the display 160 based on a specific input. According to one exemplary embodiment, when the electronic device 101 detects an input (e.g., rotation of an electronic device) for rotating a screen on the display 160 (e.g., rotating an image displayed on the display 160, and/or rotating a user interface displayed on the display 160) or a specific input of calling a menu, the electronic device 101 may determine whether it outputs a user interface to which an animation effect is applied based on the specific input.

Here, when the specific input is the input of displaying the menu, the electronic device 101 may determine if the specific input is an input of calling an animation effect of, as time goes, gradually displaying the entire of a menu image starting from a part of the menu image. Or, when the specific input is an input of rotating an image, the electronic device 101 may determine if the specific input is an input of calling an animation effect of, as time goes, rotating (i.e., rotating 90 degrees) and displaying an image in a landscape mode or portrait mode. Without being limited to the aforementioned screen rotation or menu displaying, when the electronic device 101 performs an operation corresponding to an input detected through the input/output interface 150 of the electronic device 101, the electronic device 101 may output various animations (or user interfaces to which various animation effects have been applied) to the display 160.

According to one exemplary embodiment, when an animation is selected based on a specific input, an animation operation time may be designated previously. For instance, the electronic device 101 may select and output one image among a plurality of images constructing an animation every designated time gap (e.g., 0.05 seconds). For instance, the electronic device 101 may display an animation corresponding to a menu image during a previously designated operation time (for example, 1 second). For instance, when an animation operation time with respect to screen rotation is 1 second and one sheet of image is displayed every previously designated time gap (e.g., 0.05 seconds), the electronic device 101 may display, on the display 160, a total of 20 sheets of images including an image (hereinafter, referred to as a "completed image") completing the screen rotation during 1 second. Here, 19 sheets of images (e.g., animation images or image frames) excepting the image completing the screen rotation may be images including a part of the completed image. In the following description, the terms "image" and "frame" are mixed and used, but the image may mean a constituent element of the frame.

According to various exemplary embodiments, the electronic device 101 may control an animation operation time (or a display operation time) based on setting information stored in the memory 130 of the electronic device 101. According to one exemplary embodiment, the electronic device 101 may change an operation time of an animation rotating an image for 1 second, into 0.5 seconds or 0.3 seconds, based on previously stored setting information. According to one exemplary embodiment, when an operation time of a screen rotation animation is changed from 1 second to 0.5 seconds, when the electronic device 101 displays an image at a time gap of 0.05 seconds, the electronic device 101 may use 10 sheets of images to display an animation having ever been outputted using 20 sheets of images. According to another exemplary embodiment, when the operation time of the screen rotation animation is changed from 1 second to 0.3 seconds, the electronic device 101 may use 6 sheets of images to display the animation having ever been outputted using the 20 sheets of images.

For example, the electronic device 101 may change an animation operation time based on battery state information. According to one exemplary embodiment, the electronic device 101 may acquire the battery state information by periods or in real time, and may set the animation operation time based on the acquired battery state information. For example, the battery state information may include battery level information, power management information that is running in the electronic device 101, or battery use amount information, and the like. Here, the power management information may include a currently running battery operation mode among a power saving mode, a maximum power saving mode, or a normal mode which is currently running in the electronic device 101. And, the power management information may be called battery operation mode information.

For example, the electronic device 101 may check a control value, which is a weight value for setting an animation operation time based on battery state information, with reference to a database stored in the memory 130, and change an animation operation time based on the checked control value. Here, the database may include battery state information to control value. For example, when the battery state information is a battery level, the database may include a battery level to control value.

For example, the electronic device 101 may apply a control value to a preset animation operation time as in Table 1, thereby newly setting an animation operation time.

Table 1

| Battery level (%) | Control value |
|---|---|
| 100-80 | 1 |
| 80 | 0.8 |
| 75 | 0.75 |
| 70 | 0.7 |
| ⋮ | |
| 50-0 | 0.5 |

$$\text{Animation operation time} = \text{preset animation operation time} \times$$

| Operation mode | Control value |
|---|---|
| normal mode { | 1 |
| power saving mode | 0.75 |
| maximum power saving mode | 0.5 |

Referring to Table 1, the electronic device 101 may determine an animation operation time. According to one exemplary embodiment, the electronic device 101 may change a basis value of an operation time of an animation corresponding to a specific input based on information (e.g., a control value) included in a database.

According to one exemplary embodiment, when the electronic device 101 detects a specific input of calling an animation, the electronic device 101 may acquire battery state information. The electronic device 101 may check a control value corresponding to the acquired battery state information based on battery state information to control value. The electronic device 101 may apply the checked control value to a basic operation time (e.g., the preset animation operation time of Table 1) of an animation corresponding to a specific input, thereby determining an animation operation time.

According to one exemplary embodiment, the electronic device 101 may determine a control value based on a battery level among battery situation information, using the (1) of Table 1. For instance, the electronic device 101 may check a battery level, and check a control value corresponding to the checked battery level.

According to one exemplary embodiment, the electronic device 101 may determine a control value corresponding to power management information (e.g., including a battery operation mode such as a power saving mode, a normal mode, or a maximum power saving mode), using the (2) of Table 1. For instance, the electronic device 101 may check a battery operation mode, and check a control value corresponding to the battery operation mode. And, the electronic device 101 may apply the checked control value to a preset animation operation time, thereby determining an animation operation time. For instance, the electronic device 101 may multiply the preset animation operation and the control value together, thereby determining a deduced time as the animation operation time.

According to various exemplary embodiments, the present disclosure is not limited to that the electronic device 101 determines a control value in accordance with battery level information, and determines an animation operation time based on the determined control value. For example, the electronic device 101 may directly determine the animation operation time correspondingly to the battery level information as well.

According to various exemplary embodiments, as in the aforementioned description, the electronic device 101 may determine setting of a user interface to which an animation effect is applied, based on various inputs. For instance, the electronic device 101 may set operation time of animations corresponding to various specific inputs such as a specific input of changing a displayed screen or a specific input of changing (or screen rotation) a display mode (e.g., a landscape display mode or a portrait display mode). Here, the specific input may be at least one of an input detected through the input/output interface 150, a touch (e.g., a touch, a drag and/or a release) detected through the display 160 when the display 160 is constructed as a touch screen, or an input (e.g., a movement of the electronic device) detected through at least one sensor.

According to various exemplary embodiments, the electronic device 101 may set an operation time of an animation corresponding to a detected specific input, and select at least one image among a plurality of images constructing the animation based on the set operation time, and display the selected image. That is, the electronic device 101 may change the number of images of the animation in accordance with the animation operation time, thereby adjusting a scale of the animation.

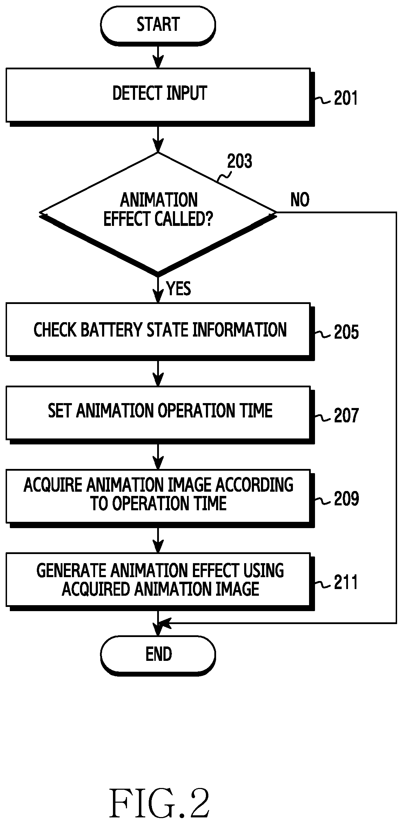

An operation in which the electronic device 101 sets an animation operation time is described with reference to FIG. 2 to FIG. 7 described below.

FIG. 2 illustrates a flow of an operation of displaying an animation in an electronic device according to various exemplary embodiments.

Referring to operation 201, the electronic device 101 may detect an input for controlling to perform a specific operation. According to one exemplary embodiment, when the input/output interface 150 and the display 160 include a touch screen, the electronic device 101 may detect a specific input through the touch screen and/or a sensor module.

According to one exemplary embodiment, the electronic device 101 may detect an input of requesting the rotation of an image displayed on the display 160 of the electronic device 101 through the sensor module. For instance, in a state where the electronic device 101 displays a user interface in a landscape mode on the display 160, the electronic device 101 may detect a movement in which the electronic device 101 is rotated such that a short length side of the electronic device 101 or display 160 becomes a horizontal direction through the sensor module. Here, it may be said that the landscape mode is a mode in which a user interface is displayed in a state where the electronic device 101 is positioned such that a long length side of the electronic device 101 or display 160 becomes the horizontal direction.

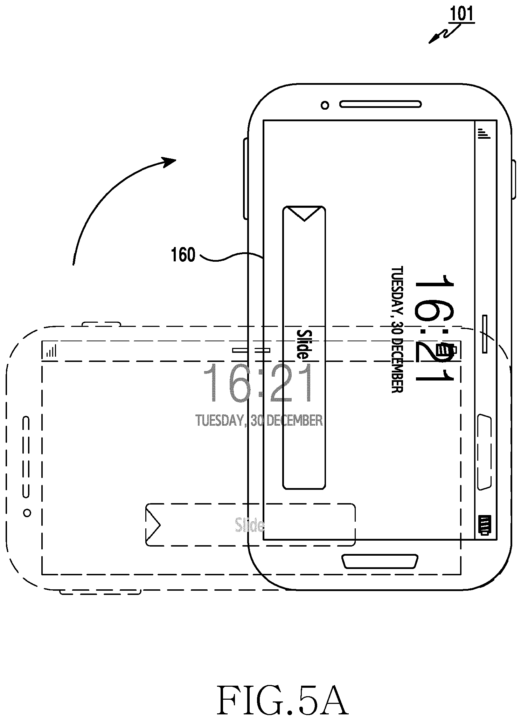

For instance, referring to FIG. 5A, in a state where the electronic device 101 displays at least one image on the display 160, the electronic device 101 may detect, through the sensor module, a movement in which the electronic device 101 is rotated in a vertical direction or horizontal direction.

According to one exemplary embodiment, the electronic device 101 may detect a specific input of changing a display mode (e.g., a landscape display mode or a portrait display mode) of displaying a screen on the display 160. For instance, in a state where the electronic device 101 displays the screen on the display 160 in the portrait display mode, the electronic device 101 may detect a specific input of rotating the electronic device 101 by 90 degrees.

According to various exemplary embodiments, when an upper zone of the display 160 is touched and the touch is held and dragged toward the center of the display 160, the electronic device 101 may detect a specific input of calling a menu hidden in an upper end of the display 160 of the electronic device 101.

According to one exemplary embodiment, when an edge (e.g., the left side or right side of the display 160) of the display 160 consisting of a touch screen is touched and dragged (e.g., dragged toward the center of the display 160), the electronic device 101 may detect a specific input of changing (or converting) a screen (e.g., an image or layer) displayed on the display 160.

In addition, without being limited to the aforementioned input for screen rotation or menu calling, the specific input may be an input of outputting a pop-up layer to a part of the display 160 as well. For instance, after at least one information included in setting information related to an operation of the electronic device 101 is changed, the electronic device 101 may detect a specific input of requesting the storage or cancelation of the changed at least one information. And, the electronic device 101 may use the pop-up layer, to display a notification window for checking whether to store changed setting or whether to end without storing the changed setting based on the detected input, on a part of the display 160.

Referring to operation 203, the electronic device 101 may check if the input detected through operation 201 is an input designated to output a user interface to which an animation effect is applied. Because an operation corresponding to a specific input may call at least one animation, the electronic device 101 may check if the operation corresponding to the specific input is designated to display the animation.

According to one exemplary embodiment, when a detected input is an input designated to perform image rotation, the electronic device 101 may determine the detected input as an input of calling an animation effect. For instance, if operation 201 detects an input of rotating the electronic device 101 of a landscape mode state in a vertical direction or an input of rotating the electronic device 101 of a portrait mode state in a horizontal direction, the electronic device 101 may check whether a user interface is applied to display a specific animation such as an animation rotating an image, based on the corresponding input.

In addition, if an input designated to output a notification or menu is detected, the electronic device 101 may check whether an animation gradually displaying the entire completed image starting from a part of the completed image of the menu or notification is applied based on the detected input.

In addition, if an input designated to output a pop-up layer of checking applying or non-applying of changed setting is detected, the electronic device 101 may check whether an animation gradually magnifying a pop-up layer up to a previously designated size starting from a small size of the pop-up layer is applied based on the detected input.

When a detected input is set to call an animation, the electronic device 101 may perform operation 205 and, otherwise, the electronic device 101 may end the exemplary embodiment of FIG. 2.

If proceeding to operation 205, the electronic device 101 may acquire battery state information about at least one battery provided. For instance, the battery state information may include at least one of battery level information, battery use amount information, and power management information. Here, the power management information may include a battery operation mode such as a power saving mode, a maximum power saving mode, or a normal mode, which is running in the electronic device 101.

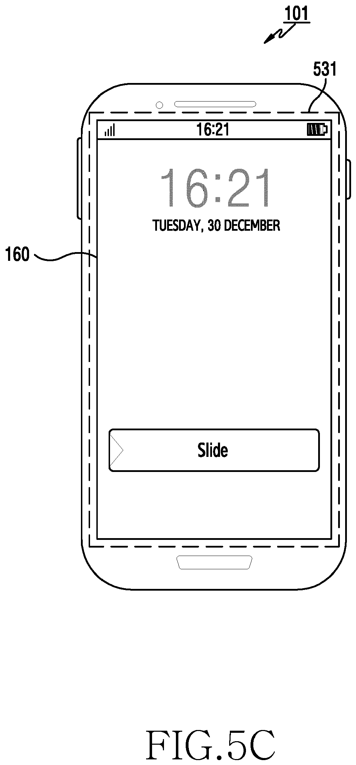

Referring to operation 207, the electronic device 101 may determine an operation time of the animation corresponding to the specific input, based on the acquired battery state information. For example, the memory 130 stores a battery state information to control value and thus, the electronic device 101 may detect a control value corresponding to the acquired battery state information, based on the battery state information to control value, and determine an animation operation time based on the detected control value. According to one exemplary embodiment, when the battery state information is the battery level information, the electronic device 101 may check a battery level from the battery level information. When the checked battery level exceeds a previously designated reference value (e.g., 80 %), the electronic device 101 may determine a control value as a basis value (e.g., 1). And, when a reference operation time of an animation (e.g., FIG. 5A or 5C) called by a specific input is 1 second, the electronic device 101 may determine an operation time (e.g., 1 second) of an animation displaying an image 531, based on the control value (e.g., 1) and the reference operation time (e.g., 1 second).

According to one exemplary embodiment, when a battery level acquired from a battery is equal to or is less than 50 %, the electronic device 101 may determine a control value as 0.5 using (1) of Table 1. And, when a reference operation time of an animation corresponding to a specific input is 1 second, the electronic device 101 may determine an operation time (0.5 × 1 = 0.5) of the animation based on the control value (0.5) and the reference operation time (1 second).

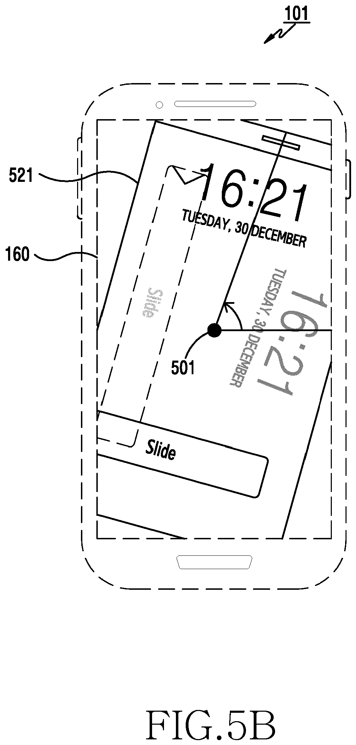

Referring to operation 209, the electronic device 101 may acquire at least two or more images capable of generating an animation effect, based on the determined animation operation time. The electronic device 101 may acquire a plurality of images constructing the animation corresponding to the input detected through operation 201. According to one exemplary embodiment, when the electronic device 101 detects an input of performing a specific function (e.g., screen rotation), the electronic device 101 may generate a plurality of images capable of generating an animation effect in which an image currently displayed on the display 160 is rotated. For instance, referring to FIG. 5B to FIG. 5C, the electronic device 101 may generate an image 521 of FIG. 5B and an image 531 of FIG. 5C so as to generate an animation effect in which an image is rotated.

According to one exemplary embodiment, to generate the animation effect corresponding to the specific input in operation 203, the electronic device 101 may generate at least one image associated with a completed image before displaying the completed image.

According to one exemplary embodiment, when an operation time of an animation displaying the image 531 (or the completed image 531) displayed on the display 160 of FIG. 5C is 1 second and a time gap displaying an image in the animation is 0.05 seconds, the electronic device 101 may generate 20 sheets of images related with the image 531, inclusive of the completed image 531.

According to one exemplary embodiment, when an operation time of an animation displaying the image 531 (or the completed image 531) displayed on the display 160 of FIG. 5C is 0.5 seconds and a time gap displaying an image in the animation is 0.05 seconds, the electronic device 101 may generate 10 sheets of images related with the image 531, inclusive of the completed image 531.

According to one exemplary embodiment, when acquiring an image related with the image 531, the electronic device 101 may acquire an image including at least a part of the image 531, such as the image 521 of FIG. 5B, in accordance with a scheme of displaying the image 531 on the display 160 (e.g., a scheme of rotating the image in a clockwise direction or counterclockwise direction).

Referring to operation 211, the electronic device 101 may display the at least one image acquired in operation 209, thereby being capable of generating the animation effect.

According to one exemplary embodiment, when an operation time of an animation for displaying a menu image (e.g., the image 531 displayed on the display 160 of FIG. 5C) is determined 1 second based on battery state information (e.g., a case where a battery level exceeds 80 %), the electronic device 101 may display 19 sheets of images at a time gap of 0.05 seconds, and display the image 531 at a time point of reaching the animation operation time, 1 second.

According to one exemplary embodiment, when an operation time of an animation for displaying a menu image (e.g., the image 531 displayed on the display 160 of FIG. 5C) is determined 0.5 seconds based on battery state information (e.g., a case where a battery level is equal to or is less than 50 %), the electronic device 101 may display 9 sheets of images at a time gap of 0.05 seconds, and display the image 531 at a time point of reaching the animation operation time, 0.5 seconds.

If performing operation 211, the electronic device 101 may end the exemplary embodiment of FIG. 2.

According to various exemplary embodiments, a method for operating an electronic device may include the operations of detecting a specific input that is set to display an image on a display, determining a user interface to which an animation effect that will be displayed on the display is applied in response to the specific input, acquiring battery state information, determining an operation time of an animation based on the battery state information, and displaying the animation and the image, based on the animation operation time.

According to one exemplary embodiment, the battery state information may include at least one of battery level information, battery operation mode information, and battery use amount information. According to one exemplary embodiment, the operation of determining the animation operation time based on the battery state information may include the operation of determining the animation operation time by applying a control value checked based on the battery state information to an operation time basically set to the animation. According to one exemplary embodiment, the animation operation time may be a result of multiplying the control value and the operation time basically set to the animation together.

According to one exemplary embodiment, the method for operating the electronic device may include the operation of generating the animation using at least a part of a frame. According to one exemplary embodiment, the method for operating the electronic device may include the operation of constructing the animation by two or more images generated using a part of the frame. According to one exemplary embodiment, the animation may be set to display the two or more images at a designated time gap. According to one exemplary embodiment, the operation of displaying the animation and the image may include the operation of, at a time point when the animation is ended, displaying the image that will be displayed on the display.

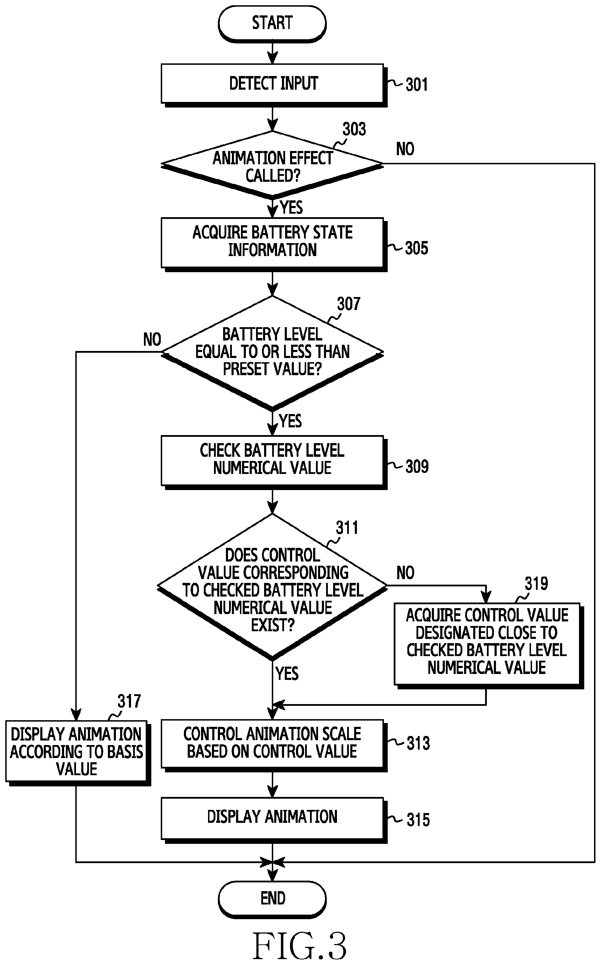

FIG. 3 illustrates a flow of an operation of displaying an animation in an electronic device according to various exemplary embodiments.

Referring to operation 301, the electronic device 101 may detect an input for controlling to perform a specific operation. According to one exemplary embodiment, when the input/output interface 150 and the display 160 include a touch screen, the electronic device 101 may detect a specific input through the touch screen and/or a sensor module.

According to one exemplary embodiment, the electronic device 101 may detect an input of requesting the rotation of an image displayed on the display 160 of the electronic device 101 through the sensor module. For instance, in a state where the electronic device 101 displays a user interface in a landscape mode on the display 160, the electronic device 101 may detect a movement in which the electronic device 101 is rotated such that a short length side of the electronic device 101 or display 160 becomes a horizontal direction through the sensor module. Here, it may be said that the landscape mode is a mode in which a user interface is displayed in a state where the electronic device 101 is positioned such that a long length side of the electronic device 101 or display 160 becomes the horizontal direction.

According to various exemplary embodiments, the electronic device 101 may perform at least one operation performed in operation 201 of FIG. 2, thereby detecting a specific input.

Referring to operation 303, the electronic device 101 may check if the input detected through operation 301 is an input designated to output a user interface to which an animation effect is applied. Because an operation corresponding to a specific input may call at least one animation or not, the electronic device 101 may check if the operation corresponding to the specific input is designated to display the animation.

According to various exemplary embodiments, the electronic device 101 may perform at least one operation carried out in operation 203 of FIG. 2, thereby checking whether a specific input is an input designated to output a user interface to which an animation effect is applied. When the checking result is that a detected input is set to call an animation, the electronic device 101 may perform operation 305 and, otherwise, the electronic device 101 may end the exemplary embodiment of FIG. 3.

If proceeding to operation 305, the electronic device 101 may acquire battery state information about at least one battery provided. For instance, the battery state information may include at least one of battery level information, battery use amount information, and power management information. Here, the power management information may include a battery operation mode such as a power saving mode, a maximum power saving mode, or a normal mode, which is running in the electronic device 101.

Referring to operation 307, the electronic device 101 may compare a battery level with a preset value (i.e., a threshold). For instance, the electronic device 101 may determine if the battery level exceeds the preset value or is equal to or is less than the preset value. For example, the preset value may be 80 %. According to one exemplary embodiment, the electronic device 101 may determine if the battery level exceeds the preset value 80% or is equal to or is less than the 80 %. When the battery level is equal to or is less than the preset value 80 %, the electronic device 101 may perform operation 309. When the battery level exceeds the preset value 80 %, the electronic device 101 may perform operation 317.

If proceeding to operation 309, the electronic device 101 may check a battery level numerical value.

According to one exemplary embodiment, the electronic device 101 may check the battery level by the unit of percentage (%). For instance, the electronic device 101 may check the battery level numerical value by a previously designated unit such as a 1 % unit or a 5 % unit.

Referring to operation 311, the electronic device 101 may check if a control value of an animation scale corresponding to the battery level numerical value exists. Here, the control value of the animation scale may be databased corresponding to the battery level numerical values. Or, the control value of the animation scale may be databased corresponding to a range consisting of at least two or more battery level numerical values. When the control value of the animation scale corresponding to the battery level numerical value exists, the electronic device 101 may perform operation 313 and, otherwise, the electronic device 101 may perform operation 319.

If proceeding to operation 313, the electronic device 101 may control the animation scale based on the checked control value. According to one exemplary embodiment, the electronic device 101 may change an operation time of an animation, based on the control value determined based on the battery level numerical value, and may change the number of images constructing the animation based on the changed animation operation time. And, the electronic device 101 may display the animation based on the changed number of images of the animation.

For instance, when a reference operation time of an animation called by a specific input is 1 second and a control value checked based on battery level information is equal to 0.5, the electronic device 101 may change an animation operation time into 0.5 seconds. When the animation operation time is changed from 1 second to 0.5 seconds, the electronic device 101 may change the number of images of the animation displayed during an animation operation, based on the animation operation time. For example, when a time gap of outputting an animation image is 0.05 seconds, the electronic device 101 may determine, as 20 sheets, the number of images of the animation that is outputted during the animation operation time, 1 second. If the time gap of outputting the animation image is 0.05 seconds and the animation operation time is 0.5 seconds, the electronic device 101 may determine, as 10 sheets, the number of images of an outputted animation.

According to various exemplary embodiments, when performing the operation of controlling the animation scale in operation 313, the electronic device 101 may perform at least one operation among operations carried out in operation 205 and operation 207 of FIG. 2.

Referring to operation 315, the electronic device 101 may display, as the animation, at least one image according to the determined animation scale. For example, the at least one image may be an image including at least a part of a frame related with a function that is called based on a specific input.

According to various exemplary embodiments, in operation 315, the electronic device 101 may perform at least one operation among operations carried out in operation 211 of FIG. 2.

If performing operation 315, the electronic device 101 may end the exemplary embodiment of FIG. 3.

Referring to operation 317, the electronic device 101 may set a control value as a basis value, and display an animation according to the set control value. According to one exemplary embodiment, when an animation operation time corresponding to a specific input is 1 second and the battery level checked in operation 307 exceeds a preset value (e.g., 80 %), the electronic device 101 may set the control value as the basis value (e.g., 1). And, the electronic device 101 may determine an operation time of an animation, based on the set control value and the reference operation time (e.g., 1 second) of the animation, and control the animation scale in accordance with the determined operation time (e.g., 1 second) of the animation. That is, the electronic device 101 may display, on the display 160, an animation image correspondingly to the animation operation time (e.g., 1 second).

If performing operation 317, the electronic device 101 may end the exemplary embodiment of FIG. 3.

Referring to operation 319, the electronic device 101 may acquire a control value close to the checked battery level numerical value. According to one exemplary embodiment, when control values corresponding to battery level numerical values are stored by the unit of 5 % in a database, the electronic device 101 may check that a control value corresponding to the checked battery level numerical value (e.g., 77 %) does not exist in the database. The electronic device 101 may acquire the control value of the animation scale as a control value corresponding to a battery level numerical value (e.g., 75 %) closest to the checked battery level numerical value (e.g., 77 %).

According to another exemplary embodiment, when it is designated to determine a control value of a higher state than the checked battery level numerical value (e.g., 77 %), the electronic device 101 may acquire a control value corresponding to 80 %, which is a value increasing the battery level numerical value (e.g., 77 %). Unlike this, when it is designated to determine a control value of a lower state than the checked battery level numerical value (e.g., 77 %), the electronic device 101 may acquire a control value corresponding to 75 %, which is a value decreasing the battery level numerical value (e.g., 77 %). When the electronic device 101 determines that the control value designated to the checked battery level numerical value does not exist, the electronic device 101 may acquire a control value in accordance with various conditions that are set based on the database. If performing operation 319, the electronic device 101 may perform operation 313.

FIG. 4 illustrates a flow of an operation of displaying an animation in an electronic device according to the present invention.

Referring to operation 401, the electronic device 101 may detect an input for controlling to perform a specific operation. According to one exemplary embodiment, when the input/output interface 150 and the display 160 include a touch screen, the electronic device 101 may detect a specific input through the touch screen and/or a sensor module.

According to one exemplary embodiment, the electronic device 101 may detect an input of requesting the rotation of an image displayed on the display 160 of the electronic device 101 through the sensor module. For instance, in a state where the electronic device 101 displays a user interface in a landscape mode on the display 160, the electronic device 101 may detect a movement in which the electronic device 101 is rotated such that a short length side of the electronic device 101 or display 160 becomes a horizontal direction through the sensor module. Here, it may be said that the landscape mode is a mode in which a user interface is displayed in a state where the electronic device 101 is positioned such that a long length side of the electronic device 101 or display 160 becomes the horizontal direction. According to various exemplary embodiments, the electronic device 101 may perform at least one operation performed in operation 201 of FIG. 2, thereby detecting a specific input.

Referring to operation 403, the electronic device 101 checks if the input detected through operation 401 is an input designated to output a user interface to which an animation effect is applied. Because an operation corresponding to a specific input may call at least one animation or not, the electronic device 101 may check if the operation corresponding to the specific input is designated to display the animation.

According to various exemplary embodiments, the electronic device 101 may perform at least one operation carried out in operation 203 of FIG. 2, thereby checking whether a specific input is an input designated to output a user interface to which an animation effect is applied. When the checking result is that a detected input is set to call an animation, the electronic device 101 performs operation 405 and, otherwise, the electronic device 101 may end the exemplary embodiment of FIG. 4.

If proceeding to operation 405, the electronic device 101 acquires battery state information about at least one battery provided. For instance, the battery state information may include at least power management information. Here, the power management information may include a battery operation mode such as a power saving mode, a maximum power saving mode, or a normal mode, which is running in the electronic device 101.

Referring to operation 407, the electronic device 101 checks if the electronic device 101 is operating in the battery power saving mode. According to one exemplary embodiment, the electronic device 101 may check if the electronic device 101 is operating in the normal mode, the power saving mode, or the maximum power saving mode, using the power management information. When the checking result is that the electronic device 101 is operating in the normal mode, the electronic device 101 may perform operation 409. Unlike this, when the electronic device 101 is operating in the power saving mode or the maximum power saving mode, after determining that the electronic device 101 is operating in the battery power saving mode, the electronic device 101 may perform operation 417.

Referring to operation 409, the electronic device 101 may compare a battery level with a preset value (i.e., a threshold). For instance, the electronic device 101 may determine if the battery level exceeds the preset value or is equal to or is less than the preset value. According to one exemplary embodiment, the preset value may be 80 %. The electronic device 101 may determine if the battery level exceeds the preset value 80% or is equal to or is less than the 80 %. When the battery level is equal to or is less than the preset value 80 %, the electronic device 101 may perform operation 411. When the battery level exceeds the preset value 80 %, the electronic device 101 may perform operation 421.

If proceeding to operation 411, the electronic device 101 may check a battery level numerical value. According to one exemplary embodiment, the electronic device 101 may check the battery level by the unit of percentage (%). For instance, the electronic device 101 may check the battery level numerical value by a previously designated unit such as a 1 % unit or a 5 % unit.

Referring to operation 413, the electronic device 101 may check if a control value of an animation scale corresponding to the battery level numerical value exists. Here, the control value of the animation scale may be databased corresponding to the battery level numerical values. Or, the control value of the animation scale may be databased corresponding to a range consisting of at least two or more battery level numerical values.

According to various exemplary embodiments, when the control value corresponding to the checked battery level numerical value does not exit, the electronic device 101 may acquire a control value close to the battery level numerical value. According to one exemplary embodiment, when control values corresponding to battery level numerical values are stored by the unit of 5 % in a database, the electronic device 101 may check that a control value corresponding to the checked battery level numerical value (e.g., 77 %) is not designated to the database. The electronic device 101 may acquire the control value of the animation scale as a control value corresponding to a battery level numerical value (e.g., 75 %) closest to the checked battery level numerical value (e.g., 77 %).

According to another exemplary embodiment, when it is designated to determine a control value of a higher state than the checked battery level numerical value (e.g., 77 %), the electronic device 101 may acquire a control value corresponding to 80 %, which is a value increasing the battery level numerical value (e.g., 77 %). Unlike this, when it is designated to determine a control value of a lower state than the checked battery level numerical value (e.g., 77 %), the electronic device 101 may acquire a control value corresponding to 75 %, which is a value decreasing the battery level numerical value (e.g., 77 %). When the electronic device 101 determines that the control value designated to the checked battery level numerical value does not exist, the electronic device 101 may acquire a control value in accordance with various conditions that are set based on the database.

If proceeding to operation 415, the electronic device 101 may control the animation scale based on the checked control value. According to one exemplary embodiment, the electronic device 101 may change an operation time of an animation, based on the control value determined based on the battery level numerical value, and may change the number of images constructing the animation based on the changed animation operation time. And, the electronic device 101 may display the animation based on the changed number of images of the animation.

For instance, when a reference operation time of an animation called by a specific input is 1 second and a control value checked based on battery level information is equal to 0.5, the electronic device 101 may change an animation operation time into 0.5 seconds. When the animation operation time is changed from 1 second to 0.5 seconds, the electronic device 101 may change the number of images of the animation displayed during an animation operation, based on the animation operation time. For example, when a time gap of outputting an animation image is 0.05 seconds, the electronic device 101 may determine, as 20 sheets, the number of images of the animation that is outputted during the animation operation time, 1 second. If the time gap of outputting the animation image is 0.05 seconds and the animation operation time is 0.5 seconds, the electronic device 101 may determine, as 10 sheets, the number of images of an outputted animation. According to various exemplary embodiments, when performing the operation of controlling the animation scale in operation 415, the electronic device 101 may perform at least one operation among operations carried out in operation 205 and operation 207 of FIG. 2.

Referring to operation 417, the electronic device 101 may display, as the animation, at least one image according to the determined animation scale. For example, the at least one image may be an image including at least a part of a frame related with a function that is called based on a specific input.

According to various exemplary embodiments, in operation 417, the electronic device 101 may perform at least one operation among operations carried out in operation 211 of FIG. 2.

If performing operation 417, the electronic device 101 may end the exemplary embodiment of FIG. 4.

Referring to operation 421, the electronic device 101 may set a control value as a basis value, and display an animation according to the set control value.

According to one exemplary embodiment, when an animation operation time corresponding to a specific input is 1 second and the battery level checked in operation 409 exceeds a preset value (e.g., 80 %), the electronic device 101 may set the control value as the basis value (e.g., 1). And, the electronic device 101 may determine an operation time of an animation, based on the set control value and the reference operation time (e.g., 1 second) of the animation, and control the animation scale in accordance with the determined operation time (e.g., 1 second) of the animation. That is, the electronic device 101 may display, on the display 160, an animation image correspondingly to the animation operation time (e.g., 1 second).

If performing operation 421, the electronic device 101 may perform operation 415.

Referring to operation 419, the electronic device 101 acquires a control value corresponding to the battery power saving mode. According to one exemplary embodiment, when the electronic device 101 is operating in the power saving mode, the electronic device 101 may acquire a control value (e.g., 0.75) corresponding to the power saving mode based on a database. According to another exemplary embodiment, when the electronic device 101 is operating in a maximum power saving mode, the electronic device 101 may acquire a control value (e.g., 0.5) corresponding to the maximum power saving mode. After performing operation 419, the electronic device 101 may perform operation 415.

According to one exemplary embodiment, when a reference operation time of an animation called by a specific input is 1 second and the electronic device 101 is operating in the power saving mode, the electronic device 101 may change an animation operation time based on the control value corresponding to the power saving mode. For instance, the electronic device 101 may change the animation operation time into 0.75 seconds, based on the control value (e.g., 0.75) corresponding to the power saving mode and the reference operation time (i.e., 1 second) of the animation.

According to another exemplary embodiment, when the electronic device 101 is operating in the maximum power saving mode, the electronic device 101 may change the animation operation time into 0.5 seconds, based on the control value (e.g., 0.5) corresponding to the maximum power saving mode and the reference operation time (i.e., 1 second) of the animation.

FIGS. 5A, 5B, and 5C illustrate an operation of displaying a designated image on a display in response to a specific input in an electronic device according to various exemplary embodiments.

Various exemplary embodiments of the electronic device 101 according to the present disclosure are described below with reference to FIG. 5A. FIG. 5A may describe a part of a process of determining an animation operation time in an electronic device according to various exemplary embodiments. According to one exemplary embodiment, the electronic device 101 may detect an input of controlling to display a user interface to which an animation effect is applied, through the input/output interface 150 and at least one sensor included in the electronic device 101. According to one exemplary embodiment, the electronic device 101 may perform an operation corresponding to a specific input that is detected through the display 160 consisting of a touch screen. According to one exemplary embodiment, the electronic device 101 may perform an operation of rotating an image displayed on the display 160 in response to a specific input.

According to one exemplary embodiment, the electronic device 101 may detect a specific input of changing an operation mode of the electronic device 101 through at least one sensor included in the electronic device 101 such as a gyro sensor or a slope sensor. For instance, the electronic device 101 may be in a state where a landscape display mode or a portrait display mode is set as a display mode. When the electronic device 101 detects that a long side of the electronic device 101 is positioned in a vertical direction through at least one sensor, the electronic device 101 may determine the portrait display mode as the display mode of the electronic device 101. When the electronic device 101 detects that the long side is positioned in a horizontal direction, the electronic device 101 may determine the landscape display mode as the display mode of the electronic device 101.

According to various exemplary embodiments, when the electronic device 101 detects a specific input as mentioned above, the electronic device 101 may display, on the display 160, an image of a function corresponding to the detected specific input. When the electronic device 101 displays the image of the function corresponding to the specific input, the electronic device 101 may apply an effect of displaying, on the display 160, a plurality of images such as an animation like a video (e.g., sequentially).

According to various exemplary embodiments, when the electronic device 101 determines to display an image of a function corresponding to a specific input on the display 160, the electronic device 101 may determine to display an image of a function designated based on various inputs (e.g., key pressing using a button) detected in the electronic device 101, without being limited to the aforementioned specific input (e.g., a user input detected through the display 160).

According to one exemplary embodiment, when the electronic device 101 detects an input of touching a specific zone (e.g., an upper zone of the display 160 or a lower zone of the display 160) displayed on the display 160 and dragging toward the center of the display 160, the electronic device 101 may determine to call a function (e.g., a notification window) corresponding to the detected input.

According to one exemplary embodiment, when the electronic device 101 detects an input of touching a left zone or right zone of the display 160 and dragging toward the center of the display 160, the electronic device 101 may determine to change a screen displayed on the display 160 into another screen designated to the detected input.

Various exemplary embodiments of the electronic device 101 according to the present disclosure are described below with reference to FIG. 5B. FIG. 5B may determine an animation image associated with an operation of displaying an image of a designated function in an electronic device according to various exemplary embodiments.

According to one exemplary embodiment, the electronic device 101 may output an animation rotating a user interface (e.g., an image) displayed on the display 160 in response to a specific input. The electronic device 101 may acquire at least one animation image based on an animation operation time, and display an animation image to which an animation effect is applied and a completed image on the display 160.

According to one exemplary embodiment, when the electronic device 101 performs an operation of displaying an image of a designated function on the display 160, the electronic device 101 may generate a completed image (e.g., the image 531 of FIG. 5C) of a function designated based on a specific input and, in course of displaying the completed image, may generate at least one animation image (e.g., the animation image 521) based on the completed image (e.g., the completed image 531).

For instance, when the electronic device 101 rotates an image displayed on the display 160 based on a specific input, the electronic device 101 may check an operation time (e.g., 1 second) of an animation rotating the image of the display 160. At a time point when the electronic device 101 checks a specific input of rotating the image of the display 160, the electronic device 101 may acquire an image (e.g., a completed image) of a time point at which image rotation is completed. The electronic device 101 may check a time gap (e.g., 0.05 seconds) of displaying an animation image based on setting information, and may acquire a total of 19 sheets of images by acquiring one sheet of animation image every 0.05 seconds using a completed image on a basis of a time point of checking a specific input. When the electronic device 101 acquires an animation image using a completed image, the electronic device 101 may determine a scheme of displaying an animation on the display 160 of the electronic device 101. For instance, when the electronic device 101 detects a specific input of controlling to rotate the image displayed on the display 160 (e.g., an operation of rotating the electronic device 101 in order to change a landscape mode or portrait mode and rotate 90 degrees the image displayed on the display 160), the electronic device 101 may display an initial image and/or completed image together with an animation rotating centering on a specific position (e.g., a position 501) of the display 160. The electronic device 101 may acquire, from the initial image and/or completed image, twenty animation images generating an animation effect in which the initial image and/or completed image is rotated.

For instance, here, the animation image displayed on the display 160 0.05 seconds after a time point when the electronic device 101 detects a specific input may be acquired by rotating the initial image and/or completed image. Here, rotating the initial image and/or completed image may be rotating the initial image and/or completed image by a designated angle (e.g., 4.5 degrees) in a clockwise direction or a counterclockwise direction. The electronic device 101 may acquire an image more rotating the designated angle (e.g., 4.5 degrees) in a rotation direction of the initial image and/or completed image, as an animation image displayed 0.1 second after a time point of detecting a specific input. When the electronic device 101 acquires the animation image in the aforementioned method, the electronic device 101 displays twenty images in a designated direction from the initial image as an animation image displayed for 1 second, thereby being capable of acquiring an image (e.g., a completed image) rotating up to 90 degrees.

According to various exemplary embodiments, the electronic device 101 may include an interval of, when acquiring an image acquired at a time point of initiating rotation and a completed image, displaying all of the initial image and the completed image. For instance, when the electronic device 101 rotates an image displayed on the display 160, the electronic device 101 may perform an operation of fading out the initial image and/or fading in the completed image. The electronic device 101 may acquire at least one image acquired during an operation of rotating an image displayed on the display 160, as an animation image concurrently displaying the initial image and completed image.

When the electronic device 101 displays a completed image on the display 160, the electronic device 101 may display an animation image (e.g., animation image 521) and the completed image (e.g., completed image 531) as time goes (or at a designated time gap, e.g., a time gap of 0.05 seconds).

Various exemplary embodiments of the electronic device 101 according to the present disclosure are described below with reference to FIG. 5C. FIG. 5C may display a completed image of a designated function on the display 160 in an electronic device according to various exemplary embodiments.

According to one exemplary embodiment, when the electronic device 101 displays at least one animation image and the completed image 531 during an animation operation time, the electronic device 101 may perform a function corresponding to a specific input through the completed image 531. According to one exemplary embodiment, the electronic device 101 may display the completed image 531 corresponding to a notification window on the display 160 in response to a specific input, and may display information designated to be displayed in the notification window, on the completed image 531 of the display 160. The electronic device 101 may perform an operation corresponding to a detected specific input based on the completed image 531 displayed on the display 160.

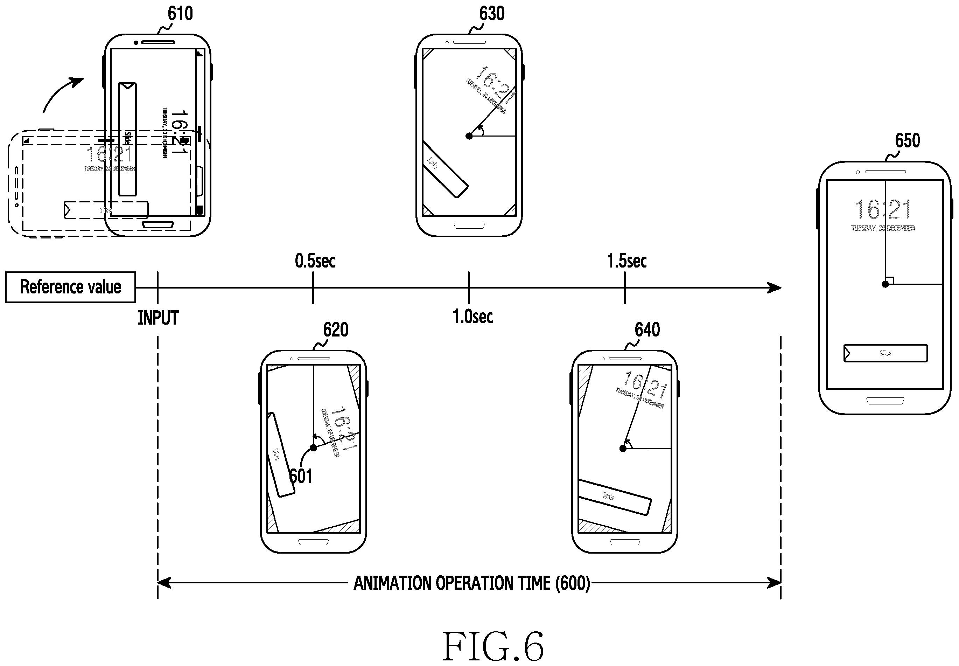

FIG. 6 illustrates an operation of displaying an animation image in accordance with an animation operation time which is designated to a basis value in an electronic device according to various exemplary embodiments.

According to one exemplary embodiment, when the electronic device 101 displays an image of a function corresponding to a specific input together with an animation, the electronic device 101 may determine an animation operation time. The electronic device 101 may check an animation operation time corresponding to a basis value based on setting information of a database.

According to one exemplary embodiment, when the electronic device 101 displays an image of a designated function on the display 160, when a battery level is sufficient (or when the battery level is not sufficient), the electronic device 101 may determine an animation operation time correspondingly to a basis value of a database. Here, according to one exemplary embodiment of the case where the battery level is sufficient, it may be a case where a battery operation mode of the electronic device 101 is a normal mode based on information set to the database, or a case where the battery level exceeds 80 %. Also, according to one exemplary embodiment of the case where the battery level is not sufficient, it may be a case where the battery operation mode of the electronic device 101 is a power saving mode or a maximum power saving mode based on the information set to the database, or a case where the battery level is equal to or is less than 80 %.

In an operation of displaying an image of a designated function on the display 160, the electronic device 101 may determine an animation operation time 600 as a preset basis value (e.g., 2 seconds). Or, when the electronic device 101 determines the animation operation time 600, the electronic device 101 may determine the animation operation time 600 as 2 seconds set to the database correspondingly to a basic control value (e.g., 1). When the electronic device 101 displays an animation on the display 160 based on the setting information of the database, the electronic device 101 may check that it is set to display one sheet of animation image every time gap of 0.5 seconds.

The electronic device 101 may determine to display a total of four sheets of images during the animation operation time of 2 seconds on a basis of an electronic device 610 of a time point at which a specific input occurs. Here, the four sheets of images may include three sheets of animation images and one sheet of completed image. According to one exemplary embodiment, the electronic device 101 may generate the completed image based on an initial image. The electronic device 101 may determine the three sheets of animation images that will be displayed on the display 160 at a time gap of 0.5 seconds, based on the initial image and/or the completed image.

The electronic device 101 may display animation images such as an electronic device 620 of a time point of 0.5 seconds, an electronic device 630 of a time point of 1.0 second, and an electronic device 640 of a time point of 1.5 seconds, at a time gap of 0.5 seconds on a basis of the electronic device 610 of the time point at which the specific input occurs, and may display a completed image such as an electronic device 650 of a time point of 2.0 seconds.

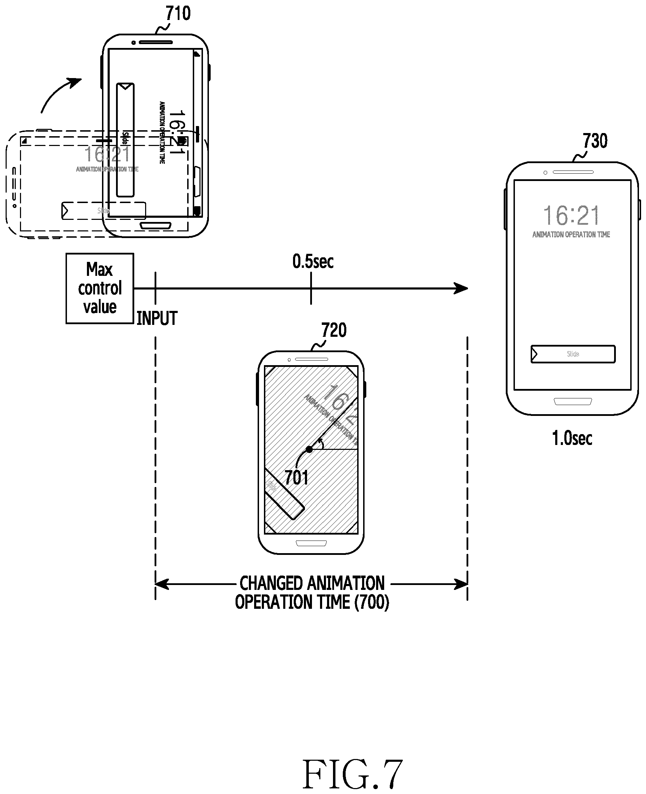

FIG. 7 illustrates an operation of displaying an animation image in accordance with an animation operation time which is changed based on a control value in an electronic device according to various exemplary embodiments.

According to one exemplary embodiment, the electronic device 101 displays an image of a function corresponding to a specific input together with an animation, the electronic device 101 may change an animation operation time. The electronic device 101 may apply a control value corresponding to a specific condition to an animation operation time corresponding to a basis value based on setting information of a database, thereby changing the animation operation time.

According to one exemplary embodiment, when the electronic device 101 displays on the display 160 an image of an animation effect that occurs in accordance with a designated function, when a battery level is less than a designated numerical value, the electronic device 101 may determine an animation operation time correspondingly to a control value of a database. Here, according to one exemplary embodiment of the case where the battery level is less than the designated numerical value, it may be a case where a battery operation mode of the electronic device 101 is a maximum power saving mode set to save battery use to the maximum based on information set to the database, or a case where the battery level is equal to or is less than 50 %.

In an operation of displaying an image of a designated function on the display 160, the electronic device 101 may apply a control value (e.g., 0.5) corresponding to the case where it is a maximum power saving mode or the case where the battery level is equal to or is less than 50 %, to an animation operation time basis value (e.g., 2 seconds), thereby determining a changed animation operation time 700 (e.g., 1 second). When the electronic device 101 displays an animation on the display 160 based on the setting information of the database, the electronic device 101 may check that it is set to display one sheet of animation image every time gap of 0.5 seconds.

According to one exemplary embodiment, the electronic device 101 may determine to display an image of a function designated based on a detected specific input on the display 160. For instance, in an operation of displaying the image of the designated function on the display 160, the electronic device 101 may apply a control value (e.g., 0.5) to an animation operation time 600 (e.g., 2 seconds), thereby determining 1 second (e.g., the changed animation operation time 700). When the electronic device 101 displays an animation on the display 160 based on setting information of a database, the electronic device 101 may check that it is set to display one sheet of animation image every time gap of 0.5 seconds.

The electronic device 101 may determine to display a total of two sheets of images during an animation operation time of 1 second on a basis of an electronic device 710 of a time point at which a specific input occurs. Here, the two sheets of images may include one sheet of animation image and one sheet of completed image. According to one exemplary embodiment, the electronic device 101 may generate the completed image based on an initial image. The electronic device 101 may determine one sheet of animation image that will be displayed on the display 160 at a time gap of 0.5 seconds based on the initial image and/or the completed image.

The electronic device 101 may display an animation image such as an electronic device 720 of a time point of 0.5 seconds, at a time gap of 0.5 seconds on a basis of the electronic device 710 of the time point at which the specific input occurs, and may display the completed image such as an electronic device 730 of a time point of 1.0 second.

Various exemplary embodiments performed by the electronic device 101 may be an operation performed by the control of the processor 120. In addition, the electronic device 101 may include a module separate from the processor 120, programmed to control various exemplary embodiments of the present disclosure. The separate module programmed to control various exemplary embodiments of the present disclosure may be operated by the control of the processor 120 as well.

According to various exemplary embodiments, the processor 120 may control to detect a specific input that is set to display an image on the display 160 through the input/output interface 150, determine a user interface to which an animation effect that will be displayed on the display 160 in response to the specific input is applied, acquire battery state information through a battery interface, determine an animation operation time based on the battery state information, and display an animation and an image based on the animation operation time. According to one exemplary embodiment, the processor 120 may acquire the battery state information including at least one information among battery level information, power management information, and battery use amount information. According to one exemplary embodiment, the processor 120 may apply a control value checked based on the battery state information to an operation time basically set to an animation, thereby determining an animation operation time. According to one exemplary embodiment, the processor 120 may determine, as the animation operation time, a result of multiplying the control value and the operation time basically set to the animation together. According to one exemplary embodiment, the processor 120 may generate an animation using at least a part of an image. According to one exemplary embodiment, the processor 120 may construct the animation by two or more images generated using a part of the image. According to one exemplary embodiment, the processor 120 may display the two or more images as the animation at a designated time gap. According to one exemplary embodiment, the processor 120 may display an image that will be displayed on the display 160 at a time point at which the animation is ended.

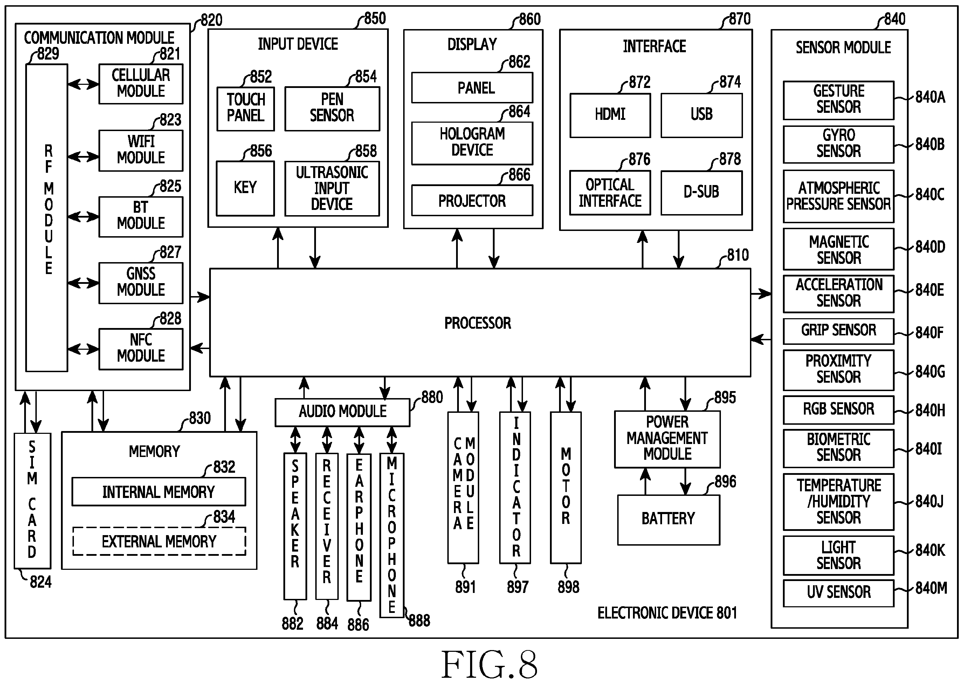

FIG. 8 illustrates a block diagram of an electronic device 801 according to various exemplary embodiments. The electronic device 801 may, for example, include the whole or part of the electronic device 101 illustrated in FIG. 1.

The electronic device 801 may include one or more processors (e.g., an Application Processor (AP)) 810, a communication module 820, a Subscriber Identification Module (SIM) module 824, a memory 830, a sensor module 840, an input unit 850, a display 860, an interface 870, an audio module 880, a camera module 891, a power management module 895, a battery 896, an indicator 897, and a motor 898.

The processor 810 may control a plurality of hardware or software components connected to the processor 810 by driving an OS or an application program and perform processing of various pieces of data and calculations. The processor 810 may be implemented by, for example, a system on chip (SoC). According to an embodiment of the present disclosure, the processor 810 may further include a graphics processing unit (GPU) and/or an image signal processor (ISP). The processor 810 may include at least some (e.g., a cellular module 821) of the elements illustrated in FIG. 8. The processor 810 may load, into a volatile memory, instructions or data received from at least one (e.g., a non-volatile memory) of the other elements and may process the loaded instructions or data, and may store various data in a non-volatile memory.

The communication module 820 may have the same or similar construction as the communication interface 170 of FIG. 1. The communication module 820 may include, for example, the cellular module 821, a Wi-Fi module 823, a Bluetooth module 825, a GNSS module 827 (e.g., a GPS module, a Glonass module, a Beidou module, or a Galileo module), an NFC module 828, and a radio frequency (RF) module 829.

The cellular module 821 may provide a voice call, image call, a text message service, or an Internet service through, for example, a communication network. According to an embodiment of the present disclosure, the cellular module 821 may distinguish between and authenticate electronic devices 801 within a communication network using a subscriber identification module (e.g., the SIM card 824). According to an embodiment of the present disclosure, the cellular module 821 may perform at least some of the functions that the processor 810 may provide. According to an embodiment of the present disclosure, the cellular module 821 may include a CP.

Each of the Wi-Fi module 823, the BT module 825, the GNSS module 827, the NFC module 828 and the MST module may include, for example, a processor for processing data transmitted and received through the relevant module. According to various embodiments of the present disclosure, at least some (e.g., two or more) of the cellular module 821, the Wi-Fi module 823, the BT module 825, the GNSS module 827, and the NFC module 828 may be included in one integrated chip (IC) or IC package.

The RF module 829 may transmit/receive, for example, a communication signal (e.g., an RF signal). The RF module 829 may include, for example, a transceiver, a power amp module (PAM), a frequency filter, a low noise amplifier (LNA), and/or an antenna. According to another embodiment of the present disclosure, at least one of the cellular module 821, the Wi-Fi module 823, the Bluetooth module 825, the GNSS module 827 or the NFC module 828 may transmit and receive RF signals through a separate RF module(s).

The subscriber identification module 824 may include, for example, a card including a subscriber identity module and/or an embedded SIM, and may contain unique identification information (e.g., an integrated circuit card identifier (ICCID)) or subscriber information (e.g., an international mobile subscriber identity (IMSI)).

The memory 830 (e.g., the memory 130) may include, for example, an internal memory 832 or an external memory 834. The internal memory 832 may include at least one of, for example, a volatile memory (e.g., a dynamic random access memory (DRAM), a static RAM (SRAM), a synchronous dynamic RAM (SDRAM), and the like) and a non-volatile memory (e.g., a one time programmable read only memory (OTPROM), a programmable ROM (PROM), an erasable and programmable ROM (EPROM), an electrically erasable and programmable ROM (EEPROM), a flash memory (e.g., a NAND flash memory or a NOR flash memory), a hard driver, or a solid state drive (SSD).

An external memory 834 may further include a flash drive, for example, a compact flash (CF), a secure digital (SD), a Micro-SD, a Mini-SD, an extreme digital (xD), a multi-media card (MMC), a memory stick, and the like. The external memory 834 may be functionally and/or physically connected to the electronic device 801 through various interfaces.

The sensor module 840 may measure a physical quantity or detect an operation state of the electronic device 801, and may convert the measured or detected information into an electrical signal. The sensor module 840 may include, for example, at least one of a gesture sensor 840A, a gyro sensor 840B, an atmospheric pressure sensor 840C, a magnetic sensor 840D, an acceleration sensor 840E, a grip sensor 840F, a proximity sensor 840G, a color sensor 840H (e.g., a red, green, blue (RGB) sensor), a biometric sensor 8401, a temperature/humidity sensor 840J, a light sensor 840K, and a ultraviolet (UV) sensor 840M. Additionally or alternatively, the sensor module 840 may include, for example, an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 840 may further include a control circuit for controlling one or more sensors included therein. In various embodiments of the present disclosure, an electronic device 801 may further include a processor configured to control the sensor module 840 as a part of or separately from the processor 810, and may control the sensor module 840 while the processor 810 is in a sleep state.

The input device 850 may include, for example, a touch panel 852, a (digital) pen sensor 854, a key 856, or an ultrasonic input device 858. The touch panel 852 may use at least one of, for example, a capacitive scheme, a resistive scheme, an infrared scheme, and an ultrasonic scheme. In addition, the touch panel 852 may further include a control circuit. The touch panel 852 may further include a tactile layer and provide a tactile reaction to the user.

The (digital) pen sensor 854 may include, for example, a recognition sheet which is a part of the touch panel or is separated from the touch panel. The key 856 may include, for example, a physical button, an optical key, a keypad, and the like. The ultrasonic input device 858 may detect ultrasonic wave generated by an input tool through a microphone (e.g., a microphone 888) and identify data corresponding to the detected ultrasonic waves.

The display 860 (e.g., the display 160) may include a panel 862, a hologram device 864, or a projector 866. The panel 862 may include a configuration identical or similar to that of the display 160 illustrated in FIG. 1. The panel 862 may be implemented to be, for example, flexible, transparent, or wearable. The panel 862 and the touch panel 852 may be configured by one module. The hologram device 864 may show a three dimensional image in the air by using an interference of light. The projector 866 may display an image by projecting light onto a screen. The screen may be located, for example, inside or outside the electronic device 801. According to an embodiment of the present disclosure, the display 860 may further include a control circuit for controlling the panel 862, the hologram device 864, or the projector 866.

The interface 870 may include, for example, an HDMI 272, a USB 874, an optical interface 876, or a D-subminiature (D-sub) 878. The interface 870 may, for example, be included in the communication interface 170 illustrated in FIG. 1. Additionally or alternatively, the interface 870 may include, for example, a mobile high-definition link (MHL) interface, a SD card/ MMC interface, or an infrared data association (IrDA) standard interface.

The audio module 880 may bilaterally convert, for example, a sound and an electrical signal. At least some constituent elements of the audio module 880 may, for example, be included in the input/output interface 150 illustrated in FIG. 1. The audio module 880 may process sound information which is input or output through, for example, a speaker 882, a receiver 884, earphones 886, the microphone 888, and the like.

The camera module 891 is a device which may photograph a still image and a dynamic image. According to an embodiment of the present disclosure, the camera module 891 may include one or more image sensors (e.g., a front sensor or a back sensor), a lens, an ISP or a flash (e.g., an LED or a xenon lamp).

The power management module 895 may manage, for example, power of the electronic device 801. According to an embodiment of the present disclosure, the power management module 895 may include a power management integrated circuit (PMIC), a charger integrated circuit (IC), or a battery or fuel gauge. The PMIC may use a wired and/or wireless charging method. Examples of the wireless charging method may include, for example, a magnetic resonance method, a magnetic induction method, an electromagnetic method, and the like, and may further include additional circuits (e.g., a coil loop, a resonance circuit, a rectifier, and the like) for wireless charging. The battery gauge may measure, for example, a residual quantity of the battery 896, and a voltage, a current, or a temperature during the charging. The battery 896 may include, for example, a rechargeable battery or a solar battery.

The indicator 897 may indicate a particular state (e.g., a booting state, a message state, a charging state, and the like) of the electronic device 801 or a part (e.g., the processor 810) of the electronic device 801. The motor 898 may convert an electrical signal into mechanical vibration, and may generate vibration, a haptic effect, and the like. Though not illustrated, the electronic device 801 may include a processing device (e.g., a GPU) for mobile TV support. The processing device for mobile TV support may, for example, process media data in compliance with the standards of Digital Multimedia Broadcasting (DMB), Digital Video Broadcasting (DVB), or mediaFloTM, and the like.

Each of the components of the electronic device according to the present disclosure may be implemented by one or more components, and the name of the corresponding component may vary depending on the type of the electronic device. The electronic device according to various embodiments of the present disclosure may include at least one of the aforementioned elements. Some elements may be omitted or other additional elements may be further included in the electronic device. In addition, some of the hardware components according to various embodiments may be combined into one entity, which may perform functions identical to those of the relevant components before the combination.

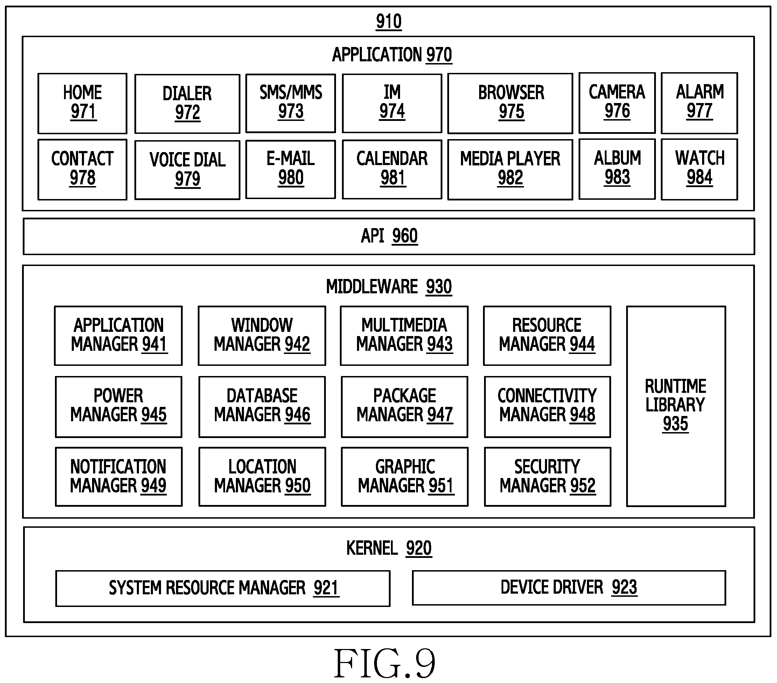

FIG. 9 illustrates a block diagram of a program module according to an embodiment of the present disclosure. Referring to FIG. 9, according to an embodiment of the present disclosure, a program module 910 (e.g., a program 140) may include an OS for controlling resources associated with an electronic apparatus (e.g., the electronic device 101) and/or various applications (e.g., an application program 147) running on the operating system. The OS may be, for example, ANDROID, IOS, WINDOWS, SYMBIAN, TIZEN, BADA, and the like.

The program module 910 may include a kernel 920, middleware 930, an API 960, and/or an application 970. At least a part of the program module 910 can be preloaded on the electronic device (e.g., electronic device 101) or downloaded from the server.

The kernel 920 (e.g., the kernel 141) may include, for example, a system resource manager 921 or a device driver 923. The system resource manager 921 may control, allocate, or collect the system resources. According to an embodiment of the present disclosure, the system resource manager 921 may include a process management unit, a memory management unit, a file system management unit, and the like. The device driver 923 may include, for example, a display driver, a camera driver, a BT driver, a shared-memory driver, a USB driver, a keypad driver, a Wi-Fi driver, an audio driver, an inter-process communication (IPC) driver, and the like.

The middleware 930 may provide, for example, a function commonly used by the applications 970 in common or provide various functions to the applications 970 through the API 960 such that the applications 970 can efficiently use limited system resources within the electronic device. According to an embodiment of the present disclosure, the middleware 930 (e.g., the middleware 943) may include, for example, at least one of a runtime library 935, an application manager 941, a window manager 942, a multimedia manager 943, a resource manager 944, a power manager 945, a database manager 946, a package manager 947, a connectivity manager 948, a notification manager 949, a location manager 950, a graphic manager 951, and a security manager 952.

The runtime library 935 may include, for example, a library module that a compiler uses to add new functions through a programming language while the application 970 is executed. The run time library 935 may perform input/output management, memory management, or a function for an arithmetic function.

The application manager 941 may manage, for example, a life cycle of at least one of the applications 970. The window manager 942 may manage graphical user interface (GUI) resources used by a screen. The multimedia manager 943 may grasp formats associated with the reproduction of various media files, and may perform an encoding or decoding of the media file by using a codec suitable for the corresponding format. The resource manager 944 may manage resources, such as a source code, a memory, and a storage space of at least one of the applications 970.

The power manager 945 may operate together with a basic input /output system (BIOS) to manage a battery or power and may provide power information associated with the operation of the electronic device. The database manager 946 may generate, search for, or change a database to be used by at least one of the applications 970. The package manager 947 may manage the installation or the updating of applications distributed in the form of package file.

The connectivity manager 948 may manage wireless connection of, for example, Wi-Fi or BT. The notification manager 949 can display or notify of an event, such as an arrival message, a promise, a proximity notification, and the like, in such a way that does not disturb a user. The location manager 950 may manage location information of the electronic device. The graphic manager 951 may manage graphic effects to be provided to a user and user interfaces related to the graphic effects. The security manager 952 may provide all security functions associated with system security or user authentication.

The middleware 930 may include a middleware module for forming a combination of various functions of the aforementioned components. The middleware 930 may provide modules specialized according to types of operating systems in order to provide differentiated functions. Further, the middleware 930 may dynamically remove some of the existing components or add new components.

The API 960 (e.g., the API 145) is, for example, a set of API programming functions, and a different configuration thereof may be provided according to an operating system. For example, with respect to each platform, one API set may be provided in an example of ANDROID or IOS, and two or more API sets may be provided in a case example TIZEN.

The applications 970 (e.g., the application programs 147) may include, for example, one or more applications which can provide functions, such as a home function 971, a dialer 972, an SMS/MMS 973, an instant message (IM) 974, a browser 975, a camera 976, an alarm 977, contacts 978, a voice dialer 979, an email 980, a calendar 981, a media player 982, an album 983, a clock 984, a healthcare function (e.g., to measure exercise burnt calorie, or blood sugar), or an environment information (e.g., an atmospheric pressure, humidity, temperature information, and the like).

According to an embodiment of the present disclosure, the application 970 may include an application (hereinafter, for convenience of explanation, "Information Exchange application") that supports the exchange of information between the electronic device (e.g., the electronic device 101) and the external electronic device. The application associated with exchanging information may include, for example, a notification relay application for notifying an external electronic device of certain information or a device management application for managing an external electronic device.

For example, a notification relay application may include a function of transferring the notification information generated by other applications (e.g., an SMS/MMS application, an e-mail application, a healthcare application, an environmental information application, and the like) of the electronic device to the external electronic device. Further, the notification relay application may receive notification information from, for example, the external electronic device and provide the received notification information to the user. For example, the device management application may manage (e.g., install, delete, or update) at least one function (e.g., turning on/off the external electronic device itself (or some elements thereof) or adjusting the brightness (or resolution) of a display) of the external electronic device communicating with the electronic device, applications operating in the external electronic device, or services (e.g., a telephone call service or a message service) provided from the external electronic device.

According to an embodiment of the present disclosure, the application 970 may include an application (e.g., a health management application) specified according to an attribute (e.g., as an attribute of the electronic device, the type of electronic device is a mobile medical equipment) of the external electronic device. According to an embodiment of the present disclosure, the application 970 may include an application received from the external electronic device (e.g., a server, an electronic device, and the like). According to an embodiment of the present disclosure, the applications 970 may include a preloaded application or a third party application which can be downloaded from the server. The names of the elements of the program module 910, according to the embodiment illustrated in FIG. 9, may vary according to the type of operating system.

According to various embodiments of the present disclosure, at least a part of the program module 910 may be implemented in software, firmware, hardware, or a combination of two or more thereof. At least a part of the program module 910 can be implemented (e.g., executed), for example, by a processor (e.g., by an application program). At least some of the program module 910 may include, for example, a module, program, routine, sets of instructions, or process for performing one or more functions.

The term "module" as used herein may, for example, mean a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module" may be a minimum unit for performing one or more functions or a part thereof. The "module" may be mechanically or electronically implemented. For example, the "module" according to the present disclosure may include at least one of an application-specific integrated circuit (ASIC) chip, a field-programmable gate arrays (FPGAs), and a programmable-logic device for performing operations which is known or are to be developed hereinafter.

At least some of the devices (e.g., modules or functions thereof) or the method (e.g., operations) according to various embodiments may be implemented by, for example, a command stored in a computer-readable storage medium in a programming module form. The instruction, when executed by a processor (e.g., the processor 120), may cause the one or more processors to execute the function corresponding to the instruction. The computer-readable storage medium may be, for example, the memory 130.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems such that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above can involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems such that the instructions are stored and executed in a distributed fashion. In addition, functional computer programs, instructions, and instruction segments for accomplishing the present disclosure can be easily construed by programmers skilled in the art to which the present disclosure pertains.

The aforementioned hardware device may be configured to be activated as one or more software modules so as to perform operations of various exemplary embodiments, and vice versa.

According to various exemplary embodiments, the electronic device 101 may include a computer-readable storage media which store a program for performing the operations of detecting a specific input that is set to display an image on a display, determining a user interface to which an animation effect that will be displayed on the display in response to the specific input is applied, acquiring battery state information, determining an operation time of an animation based on the battery state information, and displaying the animation and an image based on the operation time of the animation.

According to various exemplary embodiments, the electronic device 101 may include a computer-readable storage media which store a program for performing the operations of detecting at least one designated input, determining if an animation effect is applied to a user interface displayed on a display in response to the designated input, when the animation effect is applied to the user interface, acquiring battery state information of the electronic device, determining an operation time of the animation effect based on the battery state information, and displaying the user interface to which the animation effect is applied based on the determined operation time.

According to various exemplary embodiments, an electronic device controls an animation operation time of a user interface displayed on a display based on a specific input in accordance with battery state information, thereby being capable of efficiently controlling a use amount of a battery.

**Claims**

1. A method for operating an electronic device, the method comprising:

   identifying at least one designated input (401);
   in response to identifying the designated input, determining whether applying an animation effect to a user interface displayed on a display of the electronic device (403);
   in response to determining applying the animation effect to the user interface, identifying battery operation mode information of the electronic device (405);
   if the battery operation mode information indicates a power saving mode (407), determining an operation time of the animation effect based on a first control value corresponding to the power saving mode (419),
   if the battery operation mode information does not indicate a power saving mode (407), determining the operation time of the animation effect based on a second control value corresponding to a current battery level among a plurality of second control values corresponding to a plurality of battery levels (413); and
   displaying, based on the determined operation time, the user interface to which the animation effect is applied,
   determining the number of at least one frame constructing the user interface based on the determined operation time; and
constructing the user interface based on the determined number of the at least one frame.

2. The method of claim 1, wherein the designated input is at least one of data acquired from at least one sensor or a touch input.

3. The method of claim 1, wherein the determined operation time is a result of multiplying the control value and the operation time basically set to the animation effect together.

4. The method of claim 1, further comprising:
generating the animation effect using at least a part of a frame constructing the user interface.

5. An electronic device comprising:

an input/output interface (150) configured to detect an input;
a display (160);
a battery interface; and
a processor (120) configured to:

identify at least one designated input detected from the input/output interface (150),
in response to identifying the designated input, determine whether applying an animation effect to a user interface displayed on the display (160),
in response to determining applying the animation effect to the user interface, identify battery operation mode information of the electronic device from the battery interface,
if the battery operation mode information indicates a power saving mode, determine an operation time of the animation effect based on a first control value corresponding to the power saving mode,
if the battery operation mode information does not indicate a power saving mode, determine the operation time of the animation effect based on a second control value corresponding to a current battery level among a plurality of second control values corresponding to a plurality of battery levels, and display, on the display (160), the user interface to which the animation effect is applied based on the determined operation time,

wherein the processor (120) is further configured to determine the number of at least one frame constructing the animation effect based on the determined operation time, and construct the user interface based on the determined number of the at least one frame.

6. The device of claim 5, wherein the processor (120) is configured to process, as the designated input, at least one of data acquired from at least one sensor comprised in the input/output interface or a touch input acquired through a touch screen.

7. The device of claim 6, wherein the at least one sensor comprises at least one of an acceleration sensor, a gyro sensor, a geomagnetic sensor, or an image sensor.

8. The device of claim 6, wherein the processor (120) is configured to determine the operation time of the animation effect based on the control value and the operation time basically set to the animation effect.

9. The device of claim 6, wherein the processor (120) is configured to generate the animation effect using at least a part of a frame constructing the user interface.

**Patentansprüche**

1. Verfahren zum Betreiben einer elektronischen Vorrichtung, wobei das Verfahren Folgendes umfasst:

Identifizieren mindestens einer bestimmten Eingabe (401);
als Antwort auf das Identifizieren der bestimmten Eingabe, Bestimmen, ob ein Animationseffekt auf eine Benutzerschnittstelle angewendet werden soll, die auf einem Display der elektronischen Vorrichtung (403) angezeigt wird;
als Antwort auf das Bestimmen, den Animationseffekt auf die Benutzerschnittstelle anzuwenden, Identifizieren von Batteriebetriebsmodusinformationen der elektronischen Vorrichtung (405);
wenn die Batteriebetriebsmodusinformationen einen Stromsparmodus (407) anzeigen, Bestimmen einer Betriebszeit des Animationseffekts basierend auf einem ersten Steuerungswert, der dem Stromsparmodus (419) entspricht,
wenn die Batteriebetriebsmodusinformationen keinen Stromsparmodus (407) anzeigen, Bestimmen der Betriebszeit des Animationseffekts basierend auf einem zweiten Steuerungswert, der einem aktuellen Batteriestand unter mehreren zweiten Steuerungswerten entspricht, die mehreren Batterieständen (413) entsprechen; und
Anzeigen der Benutzerschnittstelle, auf die der Animationseffekt angewendet wird, basierend auf der bestimmten Betriebszeit,
Bestimmen der Anzahl von mindestens einem Rahmen, der die Benutzerschnittstelle aufbaut, basierend auf der bestimmten Betriebszeit; und Aufbauen der Benutzerschnittstelle basierend auf der bestimmten Anzahl des mindestens einen Rahmens.

2. Verfahren nach Anspruch 1, wobei die bestimmte Eingabe Daten, die von mindestens einem Sensor erfasst werden, und/oder eine Berührungseingabe sind.

3. Verfahren nach Anspruch 1, wobei die bestimmte Betriebszeit ein Ergebnis des Multiplizierens des Steuerungswerts und der Betriebszeit ist, die grundsätzlich zusammen auf den Animationseffekt eingestellt werden.

4. Verfahren nach Anspruch 1, welches ferner Folgendes umfasst:
Erzeugen des Animationseffekts unter Verwenden von mindestens einem Teil eines Rahmens, der die Benutzerschnittstelle aufbaut.

5. Elektronische Vorrichtung, welche Folgendes umfasst:

eine Eingabe-/Ausgabeschnittstelle (150), die konfiguriert ist, um eine Eingabe zu erkennen;
ein Display (160);
eine Batterieschnittstelle; und
einen Prozessor (120), der konfiguriert ist zum:

Identifizieren mindestens einer bestimmten Eingabe, die von der Eingabe-/Ausgabeschnittstelle (150) erkannt wird,
als Antwort auf das Identifizieren der bestimmten Eingabe, Bestimmen, ob ein Animationseffekt auf eine Benutzerschnittstelle angewendet werden soll, die auf dem Display (160) angezeigt wird,
als Antwort auf das Bestimmen, den Animationseffekt auf die Benutzerschnittstelle anzuwenden, Identifizieren der Batteriebetriebsmodusinformationen der elektronischen Vorrichtung von der Batterieschnittstelle,
wenn die Batteriebetriebsmodusinformationen einen Stromsparmodus anzeigen, Bestimmen einer Betriebszeit des Animationseffekts basierend auf einem ersten Steuerungswert, der dem Stromsparmodus entspricht,
wenn die Batteriebetriebsmodusinformationen keinen Stromsparmodus anzeigen, Bestimmen der Betriebszeit des Animationseffekts basierend auf einem zweiten Steuerungswert, der einem aktuellen Batteriestand unter mehreren zweiten Steuerungswerten entspricht, die mehreren Batterieständen entsprechen, und
Anzeigen der Benutzerschnittstelle, auf die der Animationseffekt angewendet wird, auf dem Display (160) basierend auf der bestimmten Betriebszeit,

wobei der Prozessor (120) ferner konfiguriert ist, um die Anzahl von mindestens einem Rahmen, der den Animationseffekt aufbaut, basierend auf der bestimmten Betriebszeit zu bestimmen und die Benutzerschnittstelle basierend auf der bestimmten Anzahl des mindestens einen Rahmens aufzubauen.

6. Vorrichtung nach Anspruch 5, wobei der Prozessor (120) konfiguriert ist, um als die bestimmte Eingabe Daten zu verarbeiten, die von mindestens einem Sensor erfasst werden, der in der Eingabe-/Ausgabeschnittstelle enthalten ist, und/oder eine Berührungseingabe, die durch einen Touchscreen erfasst wird.

7. Vorrichtung nach Anspruch 6, wobei der mindestens eine Sensor einen Beschleunigungssensor, einen Kreiselsensor, einen geomagnetischen Sensor und/oder einen Bildsensor umfasst.

8. Vorrichtung nach Anspruch 6, wobei der Prozessor (120) konfiguriert ist, um die Betriebszeit des Animationseffekts basierend auf dem Steuerungswert und der Betriebszeit zu bestimmen, die grundsätzlich auf den Animationseffekt eingestellt werden.

9. Vorrichtung nach Anspruch 6, wobei der Prozessor (120) konfiguriert ist, um den Animationseffekt unter Verwenden von mindestens einem Teil eines Rahmens zu erzeugen, der die Benutzerschnittstelle aufbaut.

**Revendications**

1. Procédé de fonctionnement d'un dispositif électronique, le procédé comprenant :

identifier au moins une entrée désignée (401) ;
en réponse à l'identification de l'entrée désignée, déterminer s'il faut appliquer un effet d'animation à une interface utilisateur affichée sur une unité d'affichage du dispositif électronique (403) ;
en réponse à la détermination d'appliquer l'effet d'animation à l'interface utilisateur, identifier des informations de mode de fonctionnement de batterie du dispositif électronique (405) ;
si les informations de mode de fonctionnement de batterie indiquent un mode d'économie d'énergie (407), déterminer un temps de fonctionnement de l'effet d'animation sur la base d'une première valeur de commande correspondant au mode d'économie d'énergie (419),

si les informations de mode de fonctionnement de batterie n'indiquent pas un mode d'économie d'énergie (407), déterminer le temps de fonctionnement de l'effet d'animation sur la base d'une deuxième valeur de commande correspondant à un niveau de batterie actuel parmi une pluralité de deuxièmes valeurs de commande correspondant à une pluralité de niveaux de batterie (413) ; et

afficher, sur la base du temps de fonctionnement déterminé, l'interface utilisateur à laquelle l'effet d'animation est appliqué,

déterminer le nombre d'au moins une trame construisant l'interface utilisateur sur la base du temps de fonctionnement déterminé, et construire l'interface utilisateur sur la base du nombre déterminé de l'au moins une trame.

2. Procédé selon la revendication 1, où l'entrée désignée est au moins l'une parmi des données acquises à partir d'au moins un capteur ou une entrée tactile.

3. Procédé selon la revendication 1, où le temps de fonctionnement déterminé est un résultat de la multiplication de la valeur de commande par le temps de fonctionnement défini essentiellement pour l'effet d'animation ensemble.

4. Procédé selon la revendication 1, comprenant en outre :
   générer l'effet d'animation en utilisant au moins une partie d'une trame construisant l'interface utilisateur.

5. Dispositif électronique comprenant :

   une interface d'entrée/sortie (150) configurée pour détecter une entrée ;
   une unité d'affichage (160) ;
   une interface de batterie ; et
   un processeur (120) configuré pour :

   identifier au moins une entrée désignée détectée à partir de l'interface d'entrée/sortie (150),
   en réponse à l'identification de l'entrée désignée, déterminer s'il faut appliquer un effet d'animation à une interface utilisateur affichée sur l'unité d'affichage (160),
   en réponse à la détermination d'appliquer l'effet d'animation à l'interface utilisateur, identifier des informations de mode de fonctionnement de batterie du dispositif électronique à partir de l'interface de batterie,
   si les informations de mode de fonctionnement de batterie indiquent un mode d'économie d'énergie, déterminer un temps de fonctionnement de l'effet d'animation sur la base d'une première valeur de commande correspondant au mode d'économie d'énergie,

   si les informations de mode de fonctionnement de batterie n'indiquent pas un mode d'économie d'énergie, déterminer le temps de fonctionnement de l'effet d'animation sur la base d'une deuxième valeur de commande correspondant à un niveau de batterie actuel parmi une pluralité de deuxièmes valeurs de commande correspondant à une pluralité de niveaux de batterie, et

   afficher, sur l'unité d'affichage (160), l'interface utilisateur à laquelle l'effet d'animation est appliqué sur la base du temps de fonctionnement déterminé,

   où le processeur (120) est configuré en outre pour déterminer le nombre d'au moins une trame construisant l'effet d'animation sur la base du temps de fonctionnement déterminé, et construire l'interface utilisateur sur la base du nombre déterminé de l'au moins une trame.

6. Dispositif selon la revendication 5, où le processeur (120) est configuré pour traiter, en tant qu'entrée désignée, au moins l'une parmi des données acquises à partir d'au moins un capteur compris dans l'interface d'entrée/sortie ou une entrée tactile acquise par l'intermédiaire d'un écran tactile.

7. Dispositif selon la revendication 6, où l'au moins un capteur comprend au moins l'un parmi un capteur d'accélération, un capteur gyroscopique, un capteur géomagnétique ou un capteur d'image.

8. Dispositif selon la revendication 6, où le processeur (120) est configuré pour déterminer le temps de fonctionnement de l'effet d'animation sur la base de la valeur de commande et du temps de fonctionnement défini essentiellement pour l'effet d'animation.

9. Dispositif selon la revendication 6, où le processeur (120) est configuré pour générer l'effet d'animation en utilisant au moins une partie d'une trame construisant l'interface utilisateur.

FIG.1

EP 3 089 019 B1

```
                    ┌──────────┐
                    │  START   │
                    └────┬─────┘
                         │
                         ▼
        ┌─────────────────────────────────┐
        │         DETECT INPUT            │───── 201
        └────────────────┬────────────────┘
                         │
                         ▼
                        ╱╲              203
                      ╱    ╲         ╱
                    ╱        ╲     ╱
                  ╱ ANIMATION  ╲        NO
                 ╲ EFFECT CALLED?╱───────────────┐
                   ╲            ╱                 │
                     ╲        ╱                   │
                       ╲    ╱                     │
                        ╲╱                        │
                         │ YES                    │
                         ▼                        │
        ┌─────────────────────────────────┐      │
        │  CHECK BATTERY STATE INFORMATION │──205 │
        └────────────────┬────────────────┘      │
                         │                        │
                         ▼                        │
        ┌─────────────────────────────────┐      │
        │    SET ANIMATION OPERATION TIME  │──207 │
        └────────────────┬────────────────┘      │
                         │                        │
                         ▼                        │
        ┌─────────────────────────────────┐      │
        │  ACQUIRE ANIMATION IMAGE ACCORDING│      │
        │       TO OPERATION TIME          │──209 │
        └────────────────┬────────────────┘      │
                         │                        │
                         ▼                        │
        ┌─────────────────────────────────┐      │
        │   GENERATE ANIMATION EFFECT USING │──211 │
        │     ACQUIRED ANIMATION IMAGE     │      │
        └────────────────┬────────────────┘      │
                         │◄───────────────────────┘
                         ▼
                    ┌──────────┐
                    │   END    │
                    └──────────┘
```

FIG.2

START

DETECT INPUT ~ 301

ANIMATION EFFECT CALLED? 303 — NO

YES

ACQUIRE BATTERY STATE INFORMATION ~ 305

BATTERY LEVEL EQUAL TO OR LESS THAN PRESET VALUE? 307 — NO

YES

CHECK BATTERY LEVEL NUMERICAL VALUE ~ 309

DOES CONTROL VALUE CORRESPONDING TO CHECKED BATTERY LEVEL NUMERICAL VALUE EXIST? 311 — NO

ACQUIRE CONTROL VALUE DESIGNATED CLOSE TO CHECKED BATTERY LEVEL NUMERICAL VALUE 319

YES

DISPLAY ANIMATION ACCORDING TO BASIS VALUE 317

CONTROL ANIMATION SCALE BASED ON CONTROL VALUE ~ 313

DISPLAY ANIMATION ~ 315

END

FIG.3

START

DETECT INPUT ～401

ANIMATION
EFFECT CALLED? 403 —— NO

YES

ACQUIRE BATTERY STATE
INFORMATION ～405

BATTERY
POWER SAVING MODE? 407 —— YES

NO

BATTERY LEVEL
EQUAL TO OR LESS THAN
PRESET VALUE? 409 —— NO

ACQUIRE CONTROL VALUE
CORRESPONDING TO
BATTERY POWER SAVING
MODE 419

YES

ACQUIRE CONTROL
VALUE
CORRESPONDING TO
BASIS VALUE 421

CHECK BATTERY LEVEL
NUMERICAL VALUE ～411

ACQUIRE CONTROL VALUE
CORRESPONDING TO BATTERY
LEVEL NUMERICAL VALUE ～413

CONTROL ANIMATION SCALE IN
ACCORDANCE WITH ACQUIRED
CONTROL VALUE ～415

DISPLAY ANIMATION ～417

END

FIG.4

FIG.5A

FIG.5B

FIG.5C

610

630

650

0.5sec                    1.5sec

Reference value ⊢————————————————————————————————→

INPUT              1.0sec

620                         640

601

ANIMATION OPERATION TIME (600)

FIG.6

EP 3 089 019 B1

32

710

730

Max
control
value

0.5sec

INPUT

720

701

CHANGED ANIMATION
OPERATION TIME (700)

1.0sec

16:21
ANIMATION OPERATION TIME

FIG.7

FIG.8

## 910

### APPLICATION 970

| HOME 971 | DIALER 972 | SMS/MMS 973 | IM 974 | BROWSER 975 | CAMERA 976 | ALARM 977 |
|---|---|---|---|---|---|---|
| CONTACT 978 | VOICE DIAL 979 | E-MAIL 980 | CALENDAR 981 | MEDIA PLAYER 982 | ALBUM 983 | WATCH 984 |

### API 960

### MIDDLEWARE 930

| APPLICATION MANAGER 941 | WINDOW MANAGER 942 | MULTIMEDIA MANAGER 943 | RESOURCE MANAGER 944 | RUNTIME LIBRARY 935 |
|---|---|---|---|---|
| POWER MANAGER 945 | DATABASE MANAGER 946 | PACKAGE MANAGER 947 | CONNECTIVITY MANAGER 948 | |
| NOTIFICATION MANAGER 949 | LOCATION MANAGER 950 | GRAPHIC MANAGER 951 | SECURITY MANAGER 952 | |

### KERNEL 920

| SYSTEM RESOURCE MANAGER 921 | DEVICE DRIVER 923 |
|---|---|

## FIG.9

EP 3 089 019 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009058842 A1
- KR 20040092009 A
- US 2010317408 A1
- US 2003200481 A1